# EUROPÄISCHE PATENTSCHRIFT

(11) **EP 4 283 268 B1**
(45) Veröffentlichungstag und Bekanntmachung des Hinweises auf die Patenterteilung: **10.12.2025**
(21) Anmeldenummer: 23174235.4
(22) Anmeldetag: 19.05.2023
(51) Int. Cl.: G01K 1/08

(54) **TEMPERATURSENSORVORRICHTUNG**
TEMPERATURE SENSING DEVICE
DISPOSITIF DE CAPTEUR DE TEMPÉRATURE

(30) Priorität: 23.05.2022 DE 102022112975
(43) Veröffentlichungstag der Anmeldung: 29.11.2023
(73) Patentinhaber: WIKA Alexander Wiegand SE & Co. KG, 63911 Klingenberg/Main (DE)
(72) Erfinder: Bräutigam, Jürgen, 63820 Elsenfeld (DE); Eisenträger, Joachim, 63834 Sulzbach (DE); Paulitsch, Alexander, 67071 Ludwigshafen (DE); Cohrs, Andreas, 59423 Unna (DE)
(74) Vertreter: Liedtke & Partner Patentanwälte

(56) Entgegenhaltungen:
- EP-A1- 3 454 026
- CN-A- 109 781 286
- DE-U1- 202011 105 551
- JP-A- 2013 195 337
- US-A- 3 539 400

## Beschreibung

### TECHNISCHES GEBIET

Die Erfindung betrifft eine Temperatursensorvorrichtung zur Messung der Temperatur von Medien, insbesondere von strömenden Medien und/oder von Medien in industriellen Prozessanlagen, gemäß dem Oberbegriff des Anspruchs 1. Im Folgenden wird das Medium, dessen Temperatur gemessen werden soll, daher auch als Prozessmedium bezeichnet.

Die Erfindung betrifft weiterhin ein Verfahren zur Herstellung einer solchen Temperatursensorvorrichtung gemäß dem Oberbegriff des Anspruchs 16.

Um die Temperatur des Prozessmediums exakt zu bestimmen, ist es häufig erforderlich, dass ein sensitives Sensorelement, also zum Beispiel ein Thermistor oder eine Verbindungsstelle eines Thermoelements, von einer Wandung eines Gefäßes oder Rohres, welches ein Prozessmedium einfasst oder führt, beabstandet im Prozessmedium platziert wird. In der Nähe der Wandung kann das Prozessmedium nämlich häufig kühler sein, aufgrund einer Wärmeabgabe an die Umgebung. Zu diesem Zweck sind aus dem Stand der Technik zahlreiche Vorrichtungen bekannt, welche ein Sensorelement umfassen, welches in ein sogenanntes Schutzrohr eingeführt wird, wobei das Schutzrohr wiederum in das Gefäß oder das Rohr hineinragt, das das Prozessmedium beinhaltet oder führt. Durch das Schutzrohr wird das Sensorelement effektiv vor Beschädigungen und Beeinträchtigungen durch das Prozessmedium geschützt. Insbesondere wirkt das Schutzrohr einem Abknicken oder Abreißen in stark strömenden Prozessmedien entgegen. Nachteilig ist an solchen Vorrichtungen, dass das massiv ausgeführte Schutzrohr einen größeren thermischen Widerstand darstellt, sodass das Sensorelement nur noch mit größerer Verzögerung Änderungen der Temperatur des Prozessmediums detektieren kann. Man spricht auch von einer längeren Ansprechzeit.

Aus der DE 10 2017 207 006 A1 ist eine Temperatursensorvorrichtung bekannt, welche diesem Nachteil dadurch entgegenwirken soll, dass das Schutzrohr an seinem distalen Ende eine Austrittsöffnung aufweist, durch welche ein Teilabschnitt des Sensorelements über das distale Schutzrohrende hinausragt und somit in unmittelbaren Kontakt mit dem Prozessmedium kommen kann. Ein solches Schutzrohr wird im Folgenden auch als Stützrohr bezeichnet.

Weiterhin ist aus der US 3 539 400 A eine längliche elektrische Sonde für einen Einsatz in einer Umgebung mit hoher Temperatur, Oxidation und starken Vibrationen bekannt. Die Sonde besteht aus:
- einer Vielzahl von quer beabstandeten, sich in Längsrichtung erstreckenden Leitern;
- einem ersten länglichen Volumen aus isolierendem Material, das zwischen und um die Leiter herum ohne Leerstellen dicht komprimiert ist;
- einer ringförmigen erste Hülle aus hochtemperatur-, kriech- und verformungsbeständigem Material, die um das erste Volumen herum ohne Leerstellen dicht komprimiert ist;
- einer zweite Hülle aus hochtemperatur- und korrosionsbeständigem Material, die um die erste Hülle herum ohne Leerstellen dicht komprimiert ist;
- Mitteln zum Befestigen der zweiten Hülle an dem Volumen aus isolierendem Material, wobei die erste Hülle zwischen dem länglichen Volumen und der zweiten Hülle gehalten ist, ohne dass die erste Hülle an dem Volumen oder an der zweiten Hülle befestigt ist, so dass die erste Hülle in Bezug darauf frei gleiten kann, um Auswirkungen von Vibrationen, Thermoschocks und dergleichen zu absorbieren.

Die CN 109 781 286 A beschreibt eine Temperaturerfassungsvorrichtung für eine Umgebung mit hohen Temperaturen und hohem Druck. Die Temperaturerfassungsvorrichtung umfasst einen Temperatursensor und eine Hülse. Die Hülse umfasst einen Hülsenkörper und ein Kombinationsteil, das an der Umfangsfläche des Hülsenkörpers angeordnet ist und die Öffnung eines Behälters abdichtet. Der Hülsenkörper umfasst ein weit entfernt von einer getesteten Hochtemperatur- und Hochdruckumgebung angeordnetes erstes Ende und ein zweites Ende, das in die getestete Hochtemperatur- und Hochdruckumgebung hineinragt. Das in die Hochtemperatur- und Hochdruckumgebung hineinragende Erfassungsende des Temperatursensors ist aus dem Hülsenkörper herausragend. Ein Kompensationsende des Temperatursensors durchdringt den Hülsenkörper und ist aus dem Hülsenkörper herausragend angeordnet. Weiterhin umfasst die Temperaturerfassungsvorrichtung eine Füllschicht zum Abdichten eines Spalts zwischen dem Temperatursensor und dem Hülsenkörper, welche einen Raum zwischen dem im Hülsenkörper positionierten Teil des Temperatursensors und dem Hülsenkörper ausfüllt.

### AUFGABE DER ERFINDUNG

Es ist die Aufgabe der Erfindung, eine neuartige Temperatursensorvorrichtung sowie ein neuartiges Verfahren zur Herstellung einer solchen Vorrichtung anzugeben.

Die Aufgabe wird erfindungsgemäß gelöst durch eine Temperatursensorvorrichtung, welche die im Anspruch 1 angegebenen Merkmale aufweist, und durch ein Verfahren, welches die im Anspruch 16 angegebenen Merkmale aufweist.

Vorteilhafte Ausgestaltungen sind Gegenstand der abhängigen Ansprüche.

### ZUSAMMENFASSUNG DER ERFINDUNG

Ein erster Aspekt der Erfindung betrifft eine Temperatursensorvorrichtung, umfassend ein Stützrohr mit einem distalen Ende mit einer ersten distalen Öffnung, mit einem proximalen Ende mit einer ersten proximalen Öffnung und mit einem ersten Kanal, welcher sich zwischen den Öffnungen erstreckt. Weiterhin umfasst die Temperatursensorvorrichtung ein erstes Sensorelement. Das erste Sensorelement umfasst beispielsweise eine Mantelleitung mit einem verschlossenen distalen Ende, welches eine Messspitze ausbildet, wobei innerhalb der Mantelleitung wenigstens ein Temperatursensor direkt an die oder in die Nähe der Messspitze herangeführt und dort angeordnet ist. Dieser Temperatursensor ist beispielsweise ein Widerstandsthermometer, z. B. ein Platinwiderstand, oder eine Verbindungsstelle eines Thermoelements. Die Mantelleitung ist beispielsweise aus einem Edelstahl gefertigt und zur Isolation der darin verlaufenden Sensorleitungen, insbesondere ThermoelementDrähte, mit einem mineralischen Pulver ausgefüllt.

Als distal werden im Sinne dieser Schrift solche Enden des Stützrohrs bzw. solche Öffnungen daran bezeichnet, welche dem Prozessmedium zugewandt sind, insbesondere in direktem Kontakt mit dem Prozessmedium stehen oder an dieses angrenzen. Im Gegenteil dazu werden jene Enden des Stützrohrs bzw. jene Öffnungen daran, die vom Prozessmedium abgewandt sind, insbesondere nicht in direktem Kontakt mit dem Prozessmedium stehen und/oder nicht in das Prozessmedium eintauchen, als proximal bezeichnet.

Wird vorliegend von dem ersten Sensorelement, dem ersten Kanal, der ersten distalen Öffnung und der ersten proximalen Öffnung gesprochen, bedeutet dies nicht zwingend, dass weitere Sensorelemente, Kanäle, distale Öffnungen und/oder proximale Öffnungen vorhanden sind. Die gewählte Begrifflichkeit dient lediglich einer Abgrenzung des Sensorelement, des Kanals, der distalen Öffnung und der proximalen Öffnungen von in exemplarischen Ausführungsformen der Temperatursensorvorrichtung gegebenenfalls vorhandenen weiteren Sensorelementen, Kanälen, distalen Öffnungen und/oder proximalen Öffnungen.

Das erste Sensorelement ist durch die erste proximale Öffnung in den ersten Kanal eingeführt und durchdringt diesen, sodass eine Messspitze des ersten Sensorelements durch die erste distale Öffnung hindurchtritt und über das distale Ende des Stützrohrs zumindest abschnittsweise hinausragt. Das Stützrohr weist am oder nahe am distalen Ende einen ersten Befestigungsbereich auf und weist am oder nahe am proximalen Ende einen zweiten Befestigungsbereich auf. Das erste Sensorelement ist durch Lötverbindungen sowohl am ersten als auch am zweiten Befestigungsbereich mittelbar oder unmittelbar mit dem Stützrohr dichtend verbunden.

Das als "Stützrohr" beschriebene Element kann alternativ - insbesondere im Hinblick auf den im vorangehenden Abschnitt erwähnten Stand der Technik - auch als Schutzrohr bezeichnet werden. Der Begriff "Stützrohr" wurde im Kontext der Erfindung gewählt, um das Element begrifflich stärker von üblichen Schutzrohren abzugrenzen, welche ja das in sie eingeführte erste Sensorelement komplett umschließen und an ihrem distalen Ende keine Öffnung aufweisen. Das Stützrohr der vorliegenden Erfindung umfasst jedoch nicht nur die erste proximale Öffnung am proximalen Ende, sondern auch die erste distale Öffnung am distalen Ende. Das erste Sensorelement ist durch die erste proximale Öffnung in den ersten Kanal des Stützrohrs eingeführt und durchläuft diesen, sodass eine Messspitze durch die erste Öffnung am distalen Ende hindurchtritt und über das distale Ende hinausragt. Dadurch umschließt das Stützrohr das erste Sensorelement nicht vollständig, sondern nur abschnittsweise, nämlich entlang des Abschnitts, welcher zwischen den beiden Öffnungen liegt und den ersten Kanal durchläuft.

Die vorliegende Temperatursensorvorrichtung hat den Vorteil, dass sie eine schnelle Ansprechzeit und hohe Messgenauigkeit kombiniert mit einer hohen Zuverlässigkeit und Sicherheit. Die schnelle Ansprechzeit und hohe Messgenauigkeit werden dadurch erzielt, dass die Messspitze des ersten Sensorelements über das erste distale Ende des Stützrohrs hinausragt und somit in direkten Kontakt mit dem Prozessmedium kommen kann, wenn die Temperatursensorvorrichtung in einen Behälter oder eine Rohrleitung einer Prozessanlage eingebracht wird, in welcher das Prozessmedium gehalten wird bzw. welche das Prozessmedium durchströmt. Gleichzeitig sorgen die Lötverbindungen für besonders zuverlässige und dichte Verbindungen. Die Lötverbindung am ersten Befestigungsbereich bewirkt dabei effektiv, dass das Prozessmedium nicht durch die erste distale Öffnung des Stützrohrs in den ersten Kanal eindringen kann. Die Lötverbindung am zweiten Befestigungsbereich bewirkt dabei effektiv, dass selbst dann, wenn es am ersten distalen Ende zu einem Eintritt des Prozessmediums kommt oder wenn das Stützrohr bricht, das Prozessmedium nicht durch die erste proximale Öffnung am proximalen Ende des Stützrohrs austreten und somit die Prozessanlage verlassen kann. Die Temperatursensorvorrichtung kann also selbst im Fehlerfall einen Austritt des Prozessmediums wirksam verhindern und somit ein Gefährdungsrisiko reduzieren.

Die Herstellung von Lötverbindungen, wie sie vorliegenden genutzt werden, wird im Folgenden allgemein als Lötprozess bezeichnet.

Dabei erstreckt sich zwischen dem ersten und zweiten Befestigungsbereich ein Zwischenabschnitt des ersten Kanals, wobei entlang des Zwischenabschnitts das Stützrohr und das erste Sensorelement nicht verbunden sind und sich entlang dieses Zwischenbereichs nicht berühren. Somit wird in vorteilhafter Weise das erste Sensorelement entlang des Zwischenabschnitts thermisch von Stützrohr entkoppelt, sodass eine höhere Messgenauigkeit ermöglich werden kann. Weiterhin ist eine Installation des ersten Sensorelements im Stützrohr erleichtert, da beim Einführen des ersten Sensorelements in den ersten Kanal entlang des Zwischenabschnitts das Risiko von Verklemmungen oder Verkantungen zwischen erstem Sensorelement und den Innenwänden des ersten Kanals reduziert ist. Durch die zwei voneinander getrennten Befestigungsbereiche wird, wie im vorangehenden schon erläutert, eine hohe Prozesssicherheit erzielt, da zwei Barrieren zu durchbrechen sind, bevor es zu einem Austritt des Prozessmediums kommen würde. Gleichzeitig kann diese erhöhte Prozesssicherheit kostengünstig, einfach und zuverlässig erzielt werden, da nicht etwa entlang der gesamten Länge des Stützrohrs eine ununterbrochene Lötverbindung zwischen erstem Sensorelement und Stützrohr erzeugt werden muss, sondern eben nur entlang der getrennten und in ihrer Länge begrenzten Befestigungsabschnitte.

Erfindungsgemäß ist vorgesehen, dass wenigstens einer der beiden Befestigungsbereiche einen ersten Abschnitt des ersten Kanals umfasst, welcher das erste Sensorelement definiert umschließt. "Definiert umschließt" bedeutet hier und im Kontext dieser Schrift, dass ein Innendurchmesser des ersten Abschnitts des ersten Kanals derart auf den Außendurchmesser des ersten Sensorelements abgestimmt ist, dass sich ein definierter Ringspalt ergibt, wenn das erste Sensorelement in den ersten Abschnitt des ersten Kanals eingeführt ist. Dieser erste Abschnitt des ersten Kanals wird im weiteren auch als erster Kanalabschnitt oder einfach als erster Abschnitt bezeichnet. An einem Ende dieses ersten Kanalabschnitts ist ein erstes Lotreservoir angeordnet. Als Lotreservoir wird im Sinne dieser Schrift allgemein jede Geometrie betrachtet, welche dazu geeignet ist, ein Lotmaterial aufzunehmen und welche derart angeordnet ist, dass das Lot während des Lötprozesses, insbesondere Vakuumlötprozesses, in dafür vorgesehene Spalte, insbesondere Ringspalte, fließen kann oder diesen zuführbar ist. Dadurch kann die Lötverbindung, insbesondere Vakuumlötverbindung, zuverlässig und einfach automatisiert oder teilautomatisiert werden. Das erste Lotreservoir kann vor dem Lötprozess, insbesondere Vakuumlötprozess, mit einem Lot befüllt werden. Vorzugsweise ist die Temperatursensorvorrichtung während des Lötprozesses, insbesondere Vakuumlötprozesses, so auszurichten, dass sich das Lotreservoir vertikal oberhalb des ersten Abschnitts befindet. Dadurch kann das sich während des Lötprozesses, insbesondere Vakuumlötprozesses, verflüssigende Lot in den Ringspalt fließen, welcher sich durch den definierten Umschluss des ersten Sensorelements durch den ersten Abschnitt des ersten Kanals ergibt und es werden keine sonstigen Mittel oder Mechanismen benötigt. Auf diese Weise kann insbesondere vorteilhaft erreicht werden, dass sich die Lötverbindungen, insbesondere Vakuumlötverbindungen, jeweils über die gesamte Länge der Befestigungsabschnitte erstreckt; in dieser konkreten Ausgestaltung bedeutet dies, dass das Lot vollumfänglich in den Ringspalt zwischen dem ersten Abschnitt des ersten Kanals und dem ersten Sensorelement eingeströmt ist und diesen gleichmäßig über die gesamte Länge des ersten Abschnitts ausfüllt.

In einer exemplarischen Ausführungsform der Temperatursensorvorrichtung ist wenigstens eine der beiden Lötverbindungen eine Vakuumlötverbindung. Bevorzugt sind beide Lötverbindungen, also sowohl die Lötverbindung am ersten Befestigungsbereich, als auch die Lötverbindung am zweiten Befestigungsbereich Vakuumlötverbindungen. Mit Vakuumlötverbindungen sind hierbei Lötverbindungen gemeint, welche unter Vakuum hergestellt sind. Durch das Vakuumlöten können hierbei in vorteilhafter Weise Beeinträchtigungen durch Oxidationseffekte, Verunreinigungen oder Lufteinschlüsse im Lot verhindert oder zumindest verringert werden. Somit sind die Vakuumlötverbindungen am ersten und/oder zweiten Befestigungsbereich von besonders hoher Qualität und Beständigkeit.

Die Herstellung von Vakuumlötverbindungen, wie sie in exemplarischen Ausführungsformen der Temperatursensorvorrichtung genutzt werden, wird im Folgenden allgemein als Vakuumlötprozess bezeichnet.

In einer weiteren exemplarischen Ausgestaltung der Temperatursensorvorrichtung umfassen die Vakuumlötverbindungen ein flussmittelfreies Lot, oder sind mit einem flussmittelfreien Lot herstellt. Dadurch kann effektiv verhindert werden, dass Einschlüsse von Flussmittel oder Flussmittelrückständen innerhalb der Lötverbindung diese schwächen oder für Undichtigkeiten sorgen. Aufgrund dessen, dass die Lötverbindungen unter Vakuum hergestellt sind, können Oxidationseffekte sowieso effektive verhindert werden, wie in einem vorangehenden Abschnitt bereits erwähnt. In Verbindung mit flussmittelfreiem Lot kann somit eine Verbindung mit besonders hoher Güte erzielt werden. Besonders bevorzugt kann ein flussmittelfreies Nickelbasislot verwendet werden.

In einer exemplarischen Ausführungsform der Temperatursensorvorrichtung ist der Zwischenabschnitt des ersten Kanals evakuiert. Dadurch kann in vorteilhafter Weise erreicht werden, dass das erste Sensorelement entlang dieses Zwischenabschnitts thermisch besonders stark von dem Stützrohr isoliert ist, was sich positiv auf die Messgenauigkeit und Langzeitstabilität des ersten Sensorelements auswirken kann. Weiterhin kann eine Beeinflussung des ersten Sensorelements durch Gase innerhalb des Zwischenabschnitts verhindert werden. Die Evakuierung des Zwischenabschnitts kann besonders vorteilhaft erreicht werden, wenn die Lötverbindungen unter Vakuum hergestellt werden, also wenn Vakuumlötverbindungen hergestellt werden. Während des Vakuumlötprozesses ist der Zwischenabschnitt automatisch evakuiert, und wird beidseitig durch die Lötverbindungen verschlossen.

In einer weiteren exemplarischen Ausführungsform der Temperatursensorvorrichtung erstrecken sich die Lötverbindungen, insbesondere Vakuumlötverbindungen, zumindest im Wesentlichen jeweils über eine gesamte Länge des ersten Befestigungsbereichs und/oder eine gesamte Länge des zweiten Befestigungsbereichs. Der jeweilige Befestigungsbereich kann dabei eine Länge von mindestens einem Millimeter, bevorzugt eine Länge von mindestens 8 mm, besonders bevorzugt eine Länge von mindestens 10 mm aufweisen. Durch eine derart große Verbindungslänge oder -tiefe kann eine besonders zuverlässige und beständige Abdichtung und Verbindung erzielt werden. Selbst wenn es beispielsweise am äußeren Rand der Lötverbindung am ersten Befestigungsbereich zu mechanischen oder chemischen Beeinträchtigungen durch das Prozessmedium kommt, kann ein Eindringen des Prozessmediums in den ersten Kanal durch die sich über die gesamte Länge des Befestigungsbereichs erstreckende Lötverbindung wirksam und langfristig verhindert werden.

In einer weiteren exemplarischen Ausgestaltung der Temperatursensorvorrichtung weist der erste Abschnitt einen Innendurchmesser auf, welcher höchstens 0,5 mm, bevorzugt höchstens 0,1 mm, besonders bevorzugt höchstens 0,03 mm größer ist als der Außendurchmesser des ersten Sensorelements im Bereich des ersten Abschnitts. Eine solche Dimensionierung ermöglicht eine besonders zuverlässige, gleichmäßige und beständige Lötverbindung, insbesondere Vakuumlötverbindung, zwischen dem ersten Abschnitt und dem ersten Sensorelement.

In einer weiteren exemplarischen Ausgestaltung der Temperatursensorvorrichtung erstreckt sich die definierte Umschließung des ersten Sensorelements durch den erste Abschnitt über eine Länge von mindestens 1 mm, bevorzugt von mindestens 8 mm, besonders bevorzugt von mindestens 10 mm. Vorzugsweise ist der sich ergebender Ringspalt zwischen dem ersten Abschnitt und dem ersten Sensorelement über diese Länge vollständig durch das Lot gefüllt und somit diese Teile dicht miteinander verbunden.

In einer weiteren exemplarischen Ausgestaltung der Temperatursensorvorrichtung schließt sich an den ersten Abschnitt des ersten Kanals der Zwischenabschnitt an, wobei der Zwischenabschnitt zumindest abschnittsweise einen größeren Innendurchmesser als der erste Abschnitt aufweist. Das erste Lötreservoir ist in dieser Ausführungsform besonders simpel durch einen Übergangsbereich oder eine einfache Stufe zwischen dem ersten Abschnitt und dem Zwischenabschnitt gebildet. Dadurch ist insbesondere das Stützrohr mit Zwischenabschnitt, erstem Lotreservoir und erstem Abschnitt des ersten Befestigungsbereichs besonders einfach und kostengünstig herzustellen. Dabei kann der Innendurchmesser des Zwischenabschnitts beispielsweise mindestens 0,05 mm größer, bevorzugt mindestens 0,1 mm größer, besonders bevorzugt mindestens 1 mm größer sein als der Innendurchmesser des ersten Abschnitts des ersten Kanals. Auf diese Weise kann durch die Stufe oder den Übergangsbereich zwischen dem Zwischenabschnitt und dem ersten Abschnitt eine ausreichend große Menge an Lot aufgenommen werden, um im Lötprozess, insbesondere Vakuumlötprozess, eine stabile Lötverbindung zwischen den Teilen zu erzielen. Weiterhin können die in einem vorangehenden Abschnitt beschriebenen Vorteile eines evakuierten Zwischenabschnitts durch eine derartige Dimensionierung besonders effektiv ausgenutzt werden.

In einer weiteren exemplarischen Ausgestaltung der Temperatursensorvorrichtung umfasst wenigstens einer der beiden Befestigungsbereiche einen zweiten Abschnitt des ersten Kanals und eine Verbindungshülse. Dieser zweite Abschnitt des ersten Kanals wird im weiteren auch als zweiter Kanalabschnitt oder einfach als zweiter Abschnitt bezeichnet. Die Verbindungshülse umschließt definiert das erste Sensorelement und der zweite Abschnitt des ersten Kanals umschließt wiederum definiert die Verbindungshülse. "Definiert umschließt" bedeutet hier, analog zu den vorangehenden Abschnitten, dass ein Innendurchmesser des zweiten Abschnitts des ersten Kanals derart auf den Außendurchmesser der Verbindungshülse abgestimmt ist und dass ein Innendurchmesser der Verbindungshülse derart auf den Außendurchmesser des ersten Sensorelements abgestimmt ist, dass sich jeweils definierte Ringspalte zwischen den Elementen ergeben, wenn das erste Sensorelement in die Verbindungshülse und die Verbindungshülse zugleich in den zweiten Kanalabschnitt eingeführt ist. An einem Ende des zweiten Abschnitts ist ein zweites Lotreservoir angeordnet. Dadurch kann die Lötverbindung, insbesondere Vakuumlötverbindung, zuverlässig und einfach automatisiert oder teilautomatisiert erzeugt werden. Das zweite Lotreservoir kann vor dem Lötprozess, insbesondere Vakuumlötprozess, mit einem Lot befüllt werden. Während des Lötprozesses, insbesondere Vakuumlötprozesses, ist die Temperatursensorvorrichtung so auszurichten, dass sich das zweite Lotreservoir vertikal oberhalb des zweiten Abschnitts befindet. Dadurch kann das sich während des Lötprozesses, insbesondere Vakuumlötprozesses, verflüssigende Lot in die beiden Ringspalte fließen, welche sich durch den definierten Umschluss des ersten Sensorelements durch die Verbindungshülse und durch den definierten Umschluss der Verbindungshülse durch den zweiten Abschnitt des ersten Kanals ergeben. Auf diese Weise kann insbesondere die vorangehend genannte vorteilhafte Eigenschaft zuverlässig erreicht werden, nämlich dass sich die Lötverbindung, insbesondere Vakuumlötverbindung, jeweils über die gesamte Länge der Befestigungsabschnitte erstreckt; in dieser konkreten Ausgestaltung bedeutet dies, dass das Lot vollumfänglich in die beiden Ringspalte eingeströmt ist und diese gleichmäßig über die gesamte Länge des zweiten Abschnitts bzw. der Verbindungshülse ausfüllt.

In einer weiteren exemplarischen Ausgestaltung der Temperatursensorvorrichtung weist der zweite Abschnitt einen Innendurchmesser auf, welcher höchstens 0,5 mm, bevorzugt höchstens 0,1 mm, besonders bevorzugt höchstens 0,03 mm größer ist als der Außendurchmesser der Verbindungshülse. Eine solche Dimensionierung ermöglicht eine besonders zuverlässige, gleichmäßige und beständige Lötverbindung, insbesondere Vakuumlötverbindung, zwischen dem zweiten Abschnitt und der Verbindungshülse.

In einer weiteren exemplarischen Ausgestaltung der Temperatursensorvorrichtung weist die Verbindungshülse einen Innendurchmesser auf, welcher höchstens 0,5 mm, bevorzugt höchstens 0,1 mm, besonders bevorzugt höchstens 0,03 mm größer ist als der Außendurchmesser des ersten Sensorelements. Eine solche Dimensionierung ermöglicht eine besonders zuverlässige, gleichmäßige und beständige Lötverbindung, insbesondere Vakuumlötverbindung, zwischen der Verbindungshülse und dem ersten Sensorelement.

In einer weiteren exemplarischen Ausgestaltung der Temperatursensorvorrichtung erstreckt sich die definierte Umschließung des ersten Sensorelements durch die Verbindungshülse und den zweiten Abschnitt über eine Länge von mindestens 1 mm, bevorzugt von mindestens 8 mm, besonders bevorzugt von mindestens 10 mm. Vorzugsweise sind die sich ergebenden Ringspalte zwischen dem zweiten Abschnitt und der Verbindungshülse, sowie zwischen der Verbindungshülse und dem ersten Sensorelement über diese Länge vollständig durch das Lot gefüllt und somit diese Teile dicht miteinander verbunden.

In einer weiteren exemplarischen Ausgestaltung der Temperatursensorvorrichtung umfasst der erste Befestigungsbereich den ersten Abschnitt des ersten Kanals, welcher das erste Sensorelement definiert umschließt, wie im Vorangehenden beschrieben. An einer vom distalen Ende abgewandten Seite des ersten Abschnitts schließt sich der Zwischenabschnitt des ersten Kanals an den ersten Abschnitt an, wobei der Zwischenabschnitt einen größeren Innendurchmesser aufweist, als der ersten Abschnitt. Durch die Stufe zwischen dem ersten Abschnitt und dem Zwischenabschnitt wird das erste Lotreservoir gebildet, in welchem ein Lot, z. B. in Form eines Rings aus Lotmaterial, vor dem Lötprozess, insbesondere Vakuumlötprozess, platziert werden kann. Der zweite Befestigungsbereich umfasst den zweiten Abschnitt des ersten Kanals und die Verbindungshülse, wobei die Verbindungshülse das erste Sensorelement definiert umschließt und der zweite Abschnitt des ersten Kanals die Verbindungshülse definiert umschließt, wie bereits im Vorangehenden beschrieben. Das zweite Lotreservoir ist an dem vom distalen Ende des Stützrohrs abgewandten Ende des zweiten Abschnitts angeordnet und ist durch eine Stirnfläche der Verbindungshülse gebildet, auf welcher ein Lot, z. B. in Form eines Rings aus Lotmaterial, vor dem Lötprozess, insbesondere Vakuumlötprozess, platziert werden kann. Wenn die Temperatursensorvorrichtung gemäß dieser Ausführungsform so ausgerichtet wird, dass das distale Ende vertikal nach unten zeigt und das proximale Ende vertikal nach oben, so befindet sich das erste Lotreservoir direkt oberhalb des ersten Abschnitts und das zweite Lotreservoir direkt oberhalb des zweiten Abschnitt und der Verbindungshülse. Somit können beide Lötverbindungen im Rahmen eines gemeinsamen Lötprozesses, insbesondere Vakuumlötprozesses, erzeugt werden, ohne dass die Vorrichtung zwischenzeitlich neu ausgerichtet oder zwischenzeitlich neu mit Lotmaterial bestückt werden muss. Die Temperatursensorvorrichtung ist in dieser Ausführungsform somit besonders kostengünstig herzustellen.

In einer weiteren exemplarischen Ausführungsform der Temperatursensorvorrichtung ist das proximale Ende des Stützrohrs mit einem Anschlussstück verbunden oder umfasst ein solches Anschlussstück. Dadurch wird es in vorteilhafter Weise möglich, die Temperatursensorvorrichtung an eine Vielzahl denkbarer Anschlüsse anzupassen und in vielfältigen Anwendungen einzusetzen. So kann das Anschlussstück beispielsweise einen Flanschanschluss, einen Schraubanschluss (beispielsweise Einschraubanschluss), einen sogenannten VanStone-Anschluss oder einen Einschweißanschluss aufweisen.

In einer weiteren exemplarischen Ausführungsform der Temperatursensorvorrichtung ist das proximale Ende des Stützrohrs einstückig mit dem Anschlussstück verbunden, d. h. Stützrohr und Anschlussstück sind aus einem Grundteil gefertigt, etwa aus einem Schmiederohling. Diese Ausführungsform ist besonders robust und belastbar, da durch die Einstückigkeit keine Verbindungsstellen, wie etwas Scheißverbindungen benötigt werden, die ansonsten potentielle Schwachstellen darstellen würden.

In einer weiteren exemplarischen Ausführungsform der Temperatursensorvorrichtung sind das Stützrohrs und das Anschlussstück getrennte Teile, wobei das Anschlussstück einen Durchgang bzw. eine Durchgangsbohrung aufweist und das proximale Ende des Stützrohrs in oder an diesem Durchgang angeordnet ist. Eine Anordnung "in diesem Durchgang" bedeutet in diesem Kontext, dass das Stützrohr den Durchgang vollständig durchdringt, d. h. dass das Stützrohr an beiden Seiten des Durchgangs zumindest abschnittsweise über das Anschlussstück hinausragt. Eine Anordnung "an diesem Durchgang" bedeutet hingegen, dass das proximale Ende des Stützrohrs lediglich in eine Vertiefung am Durchgang eingesetzt ist oder sogar nur an einer Seitenfläche des Anschlussstückes anliegt, sodass der Durchgang und die zweite Öffnung sich zumindest abschnittsweise überlappen. Beispielsweise weist das Stützrohr eine Schulter auf, welche gegen eine Seitenfläche des Anschlussstücks oder eine Kante des Durchgangs anliegt. Die beiden Teile sind in dieser Anordnung durch eine Schraubverbindung und/oder eine Lötverbindung, insbesondere eine Vakuumlötverbindung, und/oder eine oder mehrere Schweißverbindungen miteinander verbunden. Diese Ausführungsform ist ausgezeichnet durch eine besonders kostengünstige Herstellung aus wenigen Einzelteilen, wobei dennoch eine hohe Stabilität und Belastbarkeit erzielt wird.

In einer weiteren exemplarischen Ausführungsform weist das Anschlussstück ebenfalls einen Durchgang auf und das proximale Ende des Stützrohrs ist in diesem Durchgang angeordnet, sodass das Stützrohr auf beiden Seiten des Anschlussstücks zumindest abschnittsweise über dieses hinausragt. Das Stützrohr ist durch Schweißverbindungen an beiden Seiten des Anschlussstücks mit diesem dicht und stabil verbunden. Zwischen diesen Scheißverbindungen ist ein abgeschlossener Zwischenraum zwischen dem Stützrohr und dem Durchgang des Anschlussstücks gebildet, zum Beispiel in Form eines Ringspaltes. Das Anschlussstück oder das Stützrohr weisen eine Prüfbohrung auf, welche sich von einer dem distalen Ende des Stützrohrs abgewandten Seite des Anschlussstücks oder des Stützrohrs bis zu diesem Zwischenraum erstreckt. Auch ist es möglich, dass am proximalen Ende des Stützrohrs eine Prüfbohrung ausgebildet ist, welche mit dem Zwischenabschnitt verbunden ist, wobei das Anschlussstück einen Zugang zu der Prüfbohrung aufweist. Auch kann die Prüfbohrung am proximalen Ende des Stützrohrs ausgebildet sein, wenn kein Anschlussstück vorgesehen ist. Durch die Prüfbohrung kann zuverlässig überwacht werden, ob die Schweißverbindungen noch intakt sind und/oder ob beispielsweise ein Prozessmedium in den Zwischenraum eingedrungen ist. Ein solche Überwachung lässt sich beispielsweise realisieren, indem den Zwischenraum evakuiert wird und ein Drucksensor über die Prüfbohrung mit dem Zwischenraum verbunden wird. Somit kann ein Schaden oder Fehler frühzeitig erkannt und ein Gefährdungsrisiko reduziert werden.

In einer weiteren exemplarischen Ausführungsform der Temperatursensorvorrichtung weist das Stützrohr eine konische Außenkontur auf, welche sich vom proximalen zum distalen Ende hin verjüngt und/oder das Stützrohr weist zumindest abschnittsweise eine Wendelstruktur in oder auf seiner Außenfläche auf und/oder das Stützrohr weist einen sich entlang der Länge des Stützrohrs periodisch verändernden Außendurchmesser auf. Diese Ausführungsform ermöglich eine besonders hohe Zuverlässigkeit und Stabilität, selbst bei einem Einsatz in schnell strömenden Prozessmedien. Durch die sich über die Länge des Stützrohrs verändernde Stärke bzw. Außenkontur wird eine Anregung von Vibrationen durch Wirbelbildung stark unterdrückt.

In einer weiteren exemplarischen Ausführungsform der Temperatursensorvorrichtung umfasst das Stützrohr am distalen Ende zumindest eine zweite distale Öffnung, am proximalen Ende zumindest eine zweite proximale Öffnung, zumindest einen zweiten Kanal, welcher sich zwischen der zweiten distalen Öffnung und der zweiten proximalen Öffnung erstreckt, und zumindest ein zweites Sensorelement. Dabei weist das Stützrohr am oder nahe am distalen Ende einen dritten Befestigungsbereich auf sowie am oder nahe am proximalen Ende einen vierten Befestigungsbereich auf. Das zweite Sensorelement ist durch die zweite proximale Öffnung in den zweiten Kanal eingeführt und durchdringt diesen, sodass eine Messspitze des zweiten Sensorelements durch die zweite distale Öffnung hindurchtritt und über das distale Ende des Stützrohrs zumindest abschnittsweise hinausragt. Das zweite Sensorelement ist durch Lötverbindungen am dritten sowie am vierten Befestigungsbereich mittelbar oder unmittelbar mit dem Stützrohr dichtend verbunden. In dieser Ausführungsform kann die Temperatur des Prozessmediums zumindest mit Hilfe des ersten und des zweiten Sensorelements gemessen werden. Durch diese Redundanz kann die Sicherheit der Prozessüberwachung weiter gesteigert werden: Selbst wenn eines der beiden Sensorelemente ausfallen sollte, kann aufgrund des redundanten Sensorelements die Temperatur des Prozessmediums kontinuierlich überwacht werden. Weiterhin wird es in dieser Ausführungsform vorteilhaft möglich, die Sensorsignale beider Temperatursensoren kontinuierlich oder auch periodisch zu vergleichen. Da die Messspitzen der Sensorelemente nah beieinander angeordnet sind und am distalen Ende des Stützrohrs in direktem Kontakt mit dem Prozessmedium stehen, sind sie praktischen identischen Umgebungseinflüssen, insbesondere auch identischen Temperaturen ausgesetzt. Weichen die Sensorsignale jedoch voneinander ab, oder verändert sich eine Differenz der Sensorsignale, kann dies auf eine Beeinträchtigung von mindestens einem der Sensoren hindeuten. Durch die Ausführungsform mit mindestens zwei Sensorelementen kann eine solche Beeinträchtigung zuverlässig erfasst und entsprechende Reparatur- oder Korrekturmaßnahmen eingeleitet werden.

In einer weiteren exemplarischen Ausführungsform der Temperatursensorvorrichtung erstreckt sich zwischen dem dritten und vierten Befestigungsbereich ein zweiter Zwischenabschnitt des zweiten Kanals, wobei entlang des zweiten Zwischenabschnitts das Stützrohr und das zweite Sensorelement nicht verbunden sind. Durch dies Ausführungsform können - analog zu den Darlegungen aus einem vorangegangenen Abschnitt im Hinblick auf den Zwischenabschnitt des ersten Kanals - die Vorteile einer stärkeren thermischen Entkopplung zwischen zweitem Sensorelement und Stützrohr sowie einer erleichterten Installation des zweiten Sensorelements im zweiten Kanal bei gleichzeitig unverminderter Prozesssicherheit und einfacher, kostengünstiger Fertigung erzielt werden. Eine besonders starke thermische Entkopplung kann auch hier dadurch vorteilhaft erzielt werden, indem der zweite Zwischenabschnitt evakuiert wird oder ist. Die in vorangehenden Abschnitten erläuterten Ausführungsbeispiele und Ausgestaltungen können analog auch auf den zweiten Kanal, das zweite Sensorelement, die zweite proximale Öffnung, die zweite distale Öffnung, den dritten und vierten Befestigungsbereich, sowie den zweiten Zwischenbereich übertragen werden, um die jeweiligen vorteilhaften Effekte zu erzielten.

Ein zweiter Aspekt der vorliegenden Erfindung betrifft ein Verfahren zur Herstellung einer Temperatursensorvorrichtung, insbesondere einer Temperatursensorvorrichtung gemäß des ersten Aspekts der Erfindung oder einer exemplarischen Weiterbildung dieser.

Das Verfahren beginnt mit der Bereitstellung eines Stützrohrs, welches ein distales Ende mit einer ersten distalen Öffnung, ein proximales Ende mit einer ersten proximalen Öffnung und einen ersten Kanal, welcher sich zwischen diesen beiden Öffnungen erstreckt, umfasst.

In einem Folgeschritt wird ein erstes Sensorelement, beispielsweise ein in eine mineralisolierte Mantelleitung gehüllter Temperatursensor, durch die erste proximale Öffnung in den ersten Kanal eingeführt und durch den ersten Kanal geschoben, sodass das erste Sensorelement den ersten Kanal durchläuft und zumindest eine Messspitze des ersten Temperatursensorelements durch die erste distale Öffnung am distalen Ende hindurchtritt und über das distale Ende des Stützrohrs zumindest abschnittsweise hinausragt. Dabei befindet sich am oder nahe am distalen Ende ein erster Befestigungsbereich und am oder nahe am proximalen Ende ein zweiter Befestigungsbereich. Dabei umfasst der erste Befestigungsbereich einen ersten Abschnitt des ersten Kanals, welcher das Stützrohr unter Ausbildung eines Ringspalts definiert umschließt. An einem Ende des ersten Abschnitts wird ein erstes Lotreservoir angeordnet.

In einem weiteren Folgeschnitt werden an den beiden Befestigungsbereichen Lötverbindungen zwischen dem Stützrohr und dem ersten Sensorelement hergestellt. Dies erfolgt derart, dass entlang eines sich zwischen dem ersten und zweiten Befestigungsbereich erstreckenden Zwischenabschnitts des ersten Kanals das Stützrohr und das erste Sensorelement nicht verbunden werden und sich nicht berühren.

Mittels dieses Verfahrens können Temperatursensorvorrichtung kostengünstig, effizient und zuverlässig hergestellt werden. Dabei können die Erzeugnisse dieses Herstellungsverfahrens die in den vorangegangenen Abschnitten beschriebenen Vorteile der Temperatursensorvorrichtung gemäß dem ersten Aspekt dieser Erfindung wirksam erzielen.

In einer exemplarischen Weiterbildung des Verfahrens zur Herstellung von Temperatursensorvorrichtungen umfasst der zweite Befestigungsbereich einen zweiten Abschnitt des ersten Kanals und eine Verbindungshülse, wobei die Verbindungshülse das erste Sensorelement definiert umschließt und der zweite Abschnitt die Verbindungshülse definiert umschließt und wobei ein zweites Lotreservoir an einem Ende des zweiten Abschnitts angeordnet wird. Der Begriff "definiert umschließt" ist hierbei entsprechend zu verstehen, wie in den vorangegangenen Abschnitten bezüglich des ersten Aspekts der Erfindung beschrieben. In dieser exemplarischen Weiterbildung des Verfahrens wird zwischen dem im Vorangehenden beschriebenen Schritt des Einführens des ersten Sensorelements in das Stützrohr und dem Schritt des Herstellens der Lötverbindungen noch der folgende Schritt ausgeführt:
Platzieren von Lotmaterial im oder am zweiten Lotreservoir. Das Lotmaterial kann beispielsweise in Form von Ringen aus Lotmaterial verwendet werden.

In einer exemplarischen Weiterbildung des Verfahrens zur Herstellung von Temperatursensorvorrichtungen sind das erste und das zweite Lotreservoir jeweils entweder beide an einem vom distalen Ende abgewandten oder beide an einem dem distalen Ende zugewandten Ende des ersten Abschnitts respektive zweiten Abschnitts angeordnet. Durch diese Ausgestaltung kann in einem Teilschritt zur Herstellung der Lötverbindungen die Temperatursensorvorrichtung so ausgerichtet werden, dass beide Lotreservoirs gleichzeitig vertikal oberhalb ihres jeweils zugeordneten Abschnitts des ersten Kanals befinden, also, dass sich das erste Lotreservoir vertikal oberhalb vom ersten Abschnitt und das zweite Lotreservoir vertikal oberhalb des zweiten Abschnitts befindet. Wenn dann in einem weiteren Teilschnitt ein Lötprozess durchgeführt wird und sich dabei die Lote verflüssigen, fließen sie durch die Schwerkraft direkt in die zwischen erstem Abschnitt und erstem Sensorelement bzw. zwischen zweitem Abschnitt und Verbindungshülse sowie zwischen Verbindungshülse und erstem Sensorelement gebildeten Ringspalte. Somit kann mit dieser Weiterbildung des Verfahrens eine Temperatursensorvorrichtung besonders effizient, zuverlässig und günstig hergestellt werden.

In einer exemplarischen Ausführungsform des Verfahrens zur Herstellung von Temperatursensorvorrichtungen sind die Lötverbindungen Vakuumlötverbindungen, das heißt, die Lötverbindungen werden unter Vakuum hergestellt, also durch einen Vakuumlötprozess hergestellt.

Der Offenbarungsgehalt dieser Schrift ist nicht auf die Merkmale der vorangehend genannten exemplarischen Ausführungsformen und/oder Weiterbildungen beschränkt, sondern umfasst auch beliebige Kombinationen dieser Merkmale, insofern sie sich nicht logisch gegenseitig ausschließen.

### KURZBESCHREIBUNG DER ZEICHNUNGEN

Im Folgenden werden exemplarische Ausführungsformen und Weiterbildungen der Temperatursensorvorrichtung anhand von Zeichnungen weiter erläutert. Dabei zeigt bzw. zeigen
- Figur 1: eine exemplarische Ausführungsform einer Temperatursensorvorrichtung in einer Querschnittsansicht,
- Figur 2A, 2B, 3A und 3B: verschiedene exemplarische Ausführungsform eines ersten Befestigungsbereichs vor und nach einem Lötprozess,
- Figur 4A, 4B, 5A und 5B: verschiedene exemplarische Ausführungsformen eines zweiten Befestigungsbereichs vor und nach einem Lötprozess,
- Figur 6: eine exemplarische Ausführungsform einer Temperatursensorvorrichtung in einer Querschnittsansicht,
- Figur 7A und 7B: verschiedene exemplarische Ausführungsformen einer Temperatursensorvorrichtung,
- Figur 8: eine exemplarische Ausführungsform einer Temperatursensorvorrichtung in einer Querschnittsansicht,
- Figur 9: eine exemplarische Ausführungsform der Temperatursensorvorrichtung in einer Schnittdarstellung, und
- Figur 10: eine weitere exemplarische Ausführungsform einer Temperatursensorvorrichtung in einer Schnittdarstellung.

Einander entsprechende Teile sind in allen Figuren mit gleichen Bezugszeichen referenziert.

### DETAILBESCHREIBUNG DER ZEICHNUNGEN

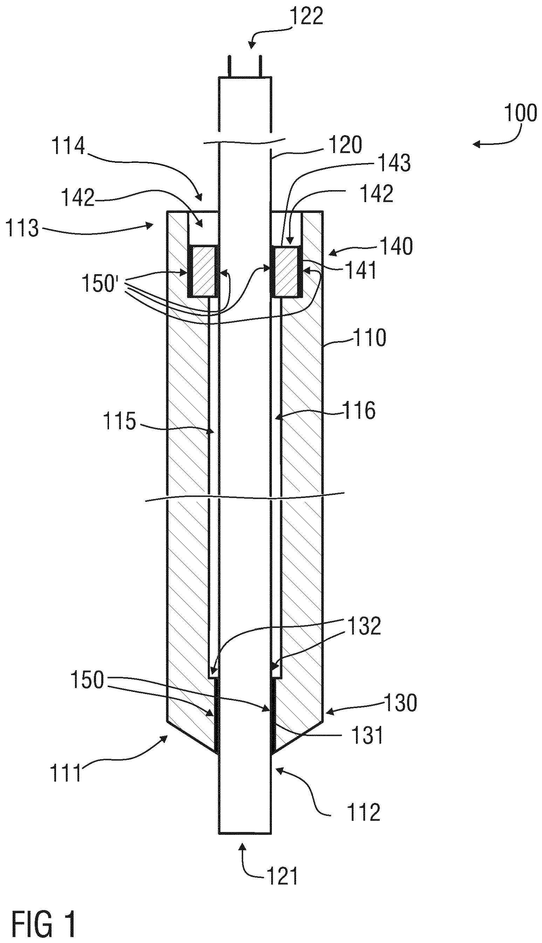

In Figur 1 ist eine exemplarische Ausführungsform einer Temperatursensorvorrichtung 100 dargestellt. Sie umfasst ein Stützrohr 110 mit einem distalen Ende 111 mit einer ersten distalen Öffnung 112 sowie mit einem proximalen Ende 113 mit einer ersten proximalen Öffnung 114. Zwischen den Öffnungen 112, 114 erstreckt sich ein erster Kanal 115, welcher einen ersten Befestigungsbereich 130, einen Zwischenabschnitt 116 und einen zweiten Befestigungsbereich 140 umfasst. Ein erstes Sensorelement 120 ist durch die erste proximale Öffnung 114 in den erster Kanal 115 eingeführt und durchläuft diesen, sodass eine Messspitze 121 des ersten Sensorelements 120 durch die erste distale Öffnung 112 hindurchtritt und über das distale Ende 111 des Stützrohrs 110 hinausragt. Das Stützrohr 110 ist durch Lötverbindungen 150, 150' am ersten und zweiten Befestigungsbereich 130, 140 mit dem ersten Sensorelement 120 dichtend verbunden. Bei diesen Lötverbindungen 150, 150' handelt es sich beispielsweise um Vakuumlötverbindungen.

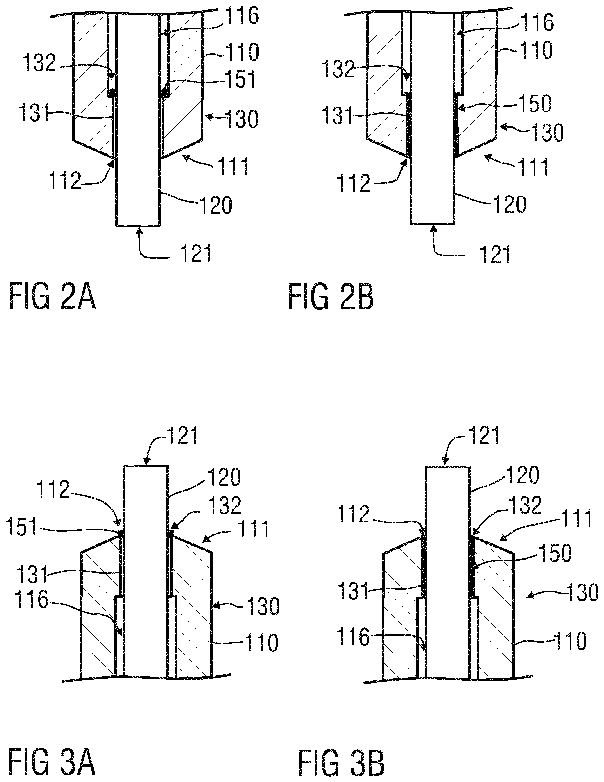

Der erste Befestigungsbereich 130 umfasst in diesem Beispiel einen ersten Abschnitt 131 des ersten Kanals 115, welcher das erste Sensorelement 120 definiert umschließt. An diesen ersten Abschnitt 131 schließt sich der Zwischenabschnitt 116 an, welcher einen größeren Innendurchmesser aufweist, als der erste Abschnitt 131. Durch die sich zwischen den Abschnitten bildende Stufe ist ein erstes Lotreservoir 132 gebildet, welches sich somit vertikal direkt oberhalb des ersten Bereichs 131 befindet. Ein derartig ausgeführter Befestigungsbereich 130 ist detailliert in den Figuren 2A und 2B dargestellt.

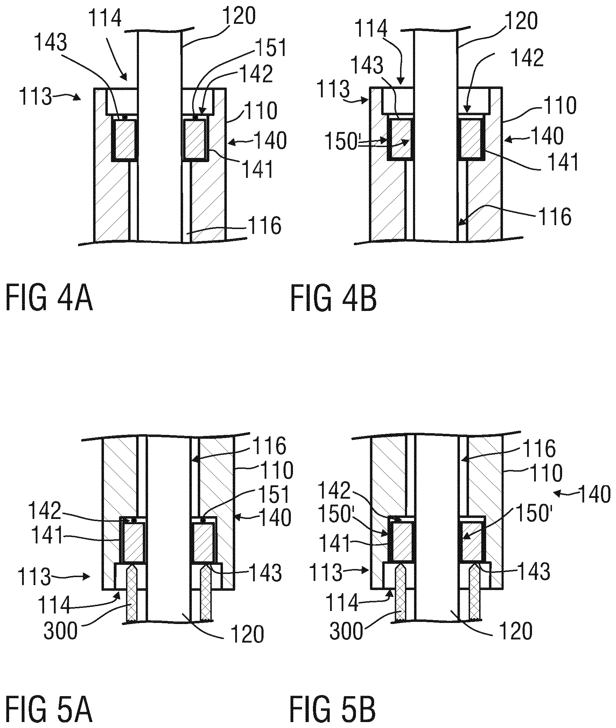

Der zweite Befestigungsbereich 140 umfasst in diesem Beispiel einen zweiten Abschnitt 141 des ersten Kanals 115 und eine Verbindungshülse 143, wobei die Verbindungshülse 143 das erste Sensorelement 120 definiert umschließt und der zweite Abschnitt 141 des ersten Kanals 115 die Verbindungshülse 143 definiert umschließt. Ein zweites Lotreservoir 142 ist vertikal direkt oberhalb des zweiten Abschnitts 141 und des Verbindungselements 143 vorgesehen. Ein derartig ausgeführter Befestigungsbereich 140 ist detailliert in den Figuren 4A und 4B dargestellt.

Bei dem ersten Sensorelement 120 handelt es sich beispielsweise um eine mineralisolierte Mantelleitung, innerhalb welcher an oder nahe an der Messspitze 121 ein Sensor angeordnet ist. Dieser Sensor kann beispielsweise ein Widerstandsthermometer oder eine Verbindungsstelle zweier Thermoelementdrähte sein. An einem von der Messspitze 121 abgewandten Ende des ersten Sensorelements 120 befinden sich Kontakte 122, über welche der Sensor mit einer Auswerteeinrichtung verbunden werden kann, welche zum Beispiel eine elektrische Eigenschaft des Sensors, wie etwa eine Spannung einen Strom oder einen Widerstand, zu einem Temperaturmesswert auswertet.

Die Figuren 2A, 2B, 3A, und 3B zeigen jeweils verschiedene exemplarische Ausführungsformen des ersten Befestigungsbereichs 130, die Figuren 4A, 4B, 5A und 5B zweigen jeweils verschiedene exemplarische Ausführungsformen des zweiten Befestigungsbereichs 140. Dabei zeigen jeweils die Figuren mit dem Zusatz "A" einen jeweiligen Befestigungsbereich 130, 140 vor der Durchführung eines Lötprozesses oder Vakuumlötprozesses, wohingegen die Figuren mit Zusatz "B" einen jeweiligen Befestigungsbereich 130, 140 nach der Durchführung eines Lötprozesses oder Vakuumlötprozesses darstellen.

In den Figuren 2A und 2B ist der erste Befestigungsbereich 130 am distalen Ende 111 des Stützrohrs 110 vergrößert in einer Schnittansicht dargestellt. Der Befestigungsbereich 130 umfasst einen ersten Abschnitt 131 des ersten Kanals 115, welcher das erste Sensorelement 120 definiert umschließt. An den ersten Abschnitt 131 schließt sich ein Zwischenabschnitt 116 an, welcher einen größeren Innendurchmesser aufweist, als der erste Abschnitt 131. Durch eine sich zwischen den beiden Abschnitten ergebende Stufe ist ein erstes Lotreservoir 132 gebildet. Wie in Figur 2A zu sehen, kann in diesem Lotreservoir 132 Lotmaterial platziert werden, z. B. in Form eines Rings aus Lotmaterial 151. Wenn das Stützrohr 110, wie in den Figuren 2A und 2B, so ausgerichtet wird, dass das distale Ende vertikal nach unten zeigt, befindet sich das Lotreservoir 132 somit vertikal direkt oberhalb des Ringspalts, welcher sich zwischen erstem Abschnitt 131 und ersten Sensorelement 120 am ersten Befestigungsbereich 130 ergibt. Somit kann das Lotmaterial, wenn es sich während eines Lötprozesses, insbesondere Vakuumlötprozesses, verflüssigt, durch seine Schwerkraft hinab in den Ringspalt fließen und diesen ausfüllen. Wie in Figur 2B dargestellt, kann dadurch eine vollständige Ausfüllung des Ringspalts erzielt werden, sodass sich die hergestellte Lötverbindung 150 vollumfänglich über die gesamte Länge des ersten Abschnitts 131 erstreckt.

Die Figuren 3A und 3B zeigen eine andere exemplarische Ausführungsform des Befestigungsbereichs 130 am distalen Ende 111 des Stützrohrs 110 vergrößert in einer Schnittansicht. In diesem Beispiel ist das Lotreservoir 132 durch eine Vertiefung am distalen Ende 111 ausgebildet. Hier kann Lotmaterial, zum Beispiel im Form eines Rings aus Lotmaterial 151, einfach aufgelegt werden. Wenn das Stützrohr 110, wie in den Figuren 3A und 3B dargestellt, so ausgerichtet wird, dass das distale Ende vertikal nach oben zeigt, befindet sich das Lotreservoir 132 somit vertikal direkt oberhalb des Ringspalts, welcher sich zwischen erstem Abschnitt 131 und erstem Sensorelement 120 am ersten Befestigungsbereich 130 ergibt. Somit kann das Lotmaterial, wenn es sich während eines Lötprozesses, insbesondere Vakuumlötprozesses, verflüssigt, durch seine Schwerkraft hinab in den Ringspalt fließen und diesen ausfüllen. Wie in Figur 3B dargestellt, kann dadurch eine vollständige Ausfüllung des Ringspalts erzielt werden, sodass sich die hergestellte Lötverbindung 150 vollumfänglich über die gesamte Länge des ersten Abschnitts 131 erstreckt.

In den Figuren 4A und 4B ist der zweite Befestigungsbereich 140 am proximalen Ende 113 des Stützrohrs 110 vergrößert in einer Schnittansicht dargestellt. Der Befestigungsbereich 140 umfasst einen zweiten Abschnitt 141 des ersten Kanals 115 sowie eine Verbindungshülse 143, wobei die Verbindungshülse 143 das erste Sensorelement 120 definiert umschließt und der zweite Abschnitt 141 des ersten Kanals 115 die Verbindungshülse 143 definiert umschließt. Ein zweites Lotreservoir 142 ist vertikal direkt oberhalb des zweiten Abschnitts 141 und des Verbindungselements 143 vorgesehen. Wie in Figur 4A zu sehen, kann in diesem zweiten Lotreservoir 142 Lotmaterial platziert werden, z. B. in Form eines Rings aus Lotmaterial 151. Wenn das Stützrohr 110, wie in den Figuren 4A und 4B, so ausgerichtet wird, dass das proximale Ende 113 vertikal nach oben zeigt, befindet sich das Lotreservoir 142 somit vertikal direkt oberhalb der Ringspalte, welche sich zwischen dem zweiten Abschnitt 141 und der Verbindungshülse 143 sowie zwischen der Verbindungshülse 143 und dem ersten Sensorelement 120 am zweiten Befestigungsbereich 140 ergeben. Somit kann das Lotmaterial, wenn es sich während eines Lötprozesses, insbesondere Vakuumlötprozesses, verflüssigt, durch seine Schwerkraft hinab in die Ringspalte fließen und diese ausfüllen. Wie in Figur 4B dargestellt, kann dadurch eine vollständige Ausfüllung beider Ringspalte erzielt werden, sodass sich die hergestellten Lötverbindungen 150' vollumfänglich über die gesamte Länge des zweiten Abschnitts 141 erstrecken.

Die Figuren 5A und 5B zeigen eine andere exemplarische Ausführungsform des Befestigungsbereichs 140 am proximalen Ende 111 des Stützrohrs 110 vergrößert in einer Schnittansicht. In diesem Beispiel ist das Lotreservoir 142 durch eine Kammer innerhalb des ersten Kanals gebildet, welche sich an einem von proximalen Ende 133 abgewandten Ende der Verbindungshülse 143 befindet. Hier kann Lotmaterial, zum Beispiel im Form eines Rings aus Lotmaterial 151, platziert werden. Eine schematisch dargestellte Haltevorrichtung 300 hält vor und während des Lötprozesses, insbesondere Vakuumlötprozesses, die Verbindungshülse 143 in der gewünschten Position, sodass diese nicht nach unten aus dem zweiten Abschnitt 141 herausrutschen kann. Wenn das Stützrohr 110, wie in den Figuren 5A und 5B dargestellt, so ausgerichtet wird, dass das proximale Ende vertikal nach oben zeigt, befindet sich das Lotreservoir 142 somit vertikal direkt oberhalb der Ringspalte, welche sich zwischen dem zweiten Abschnitt 141 und der Verbindungshülse 143, sowie zwischen der Verbindungshülse und dem ersten Sensorelement 120 am zweiten Befestigungsbereich 140 ergeben. Somit kann das Lotmaterial, wenn es sich während eines Lötprozesses, insbesondere Vakuumlötprozesses, verflüssigt, durch seine Schwerkraft hinab in die Ringspalte fließen und diese ausfüllen. Wie in Figur 5B dargestellt, kann dadurch eine vollständige Ausfüllung der Ringspalte erzielt werden, sodass sich die hergestellten Lötverbindungen 150' vollumfänglich über die gesamte Länge des zweiten Abschnitts 141 erstrecken.

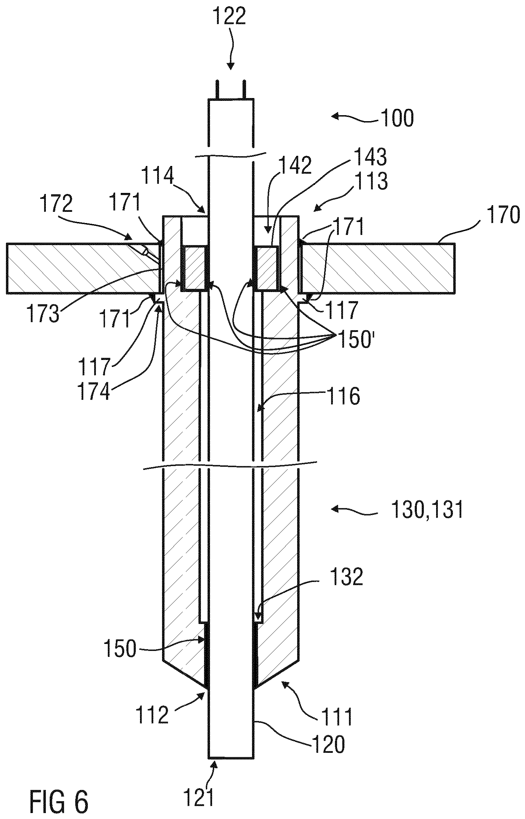

Figur 6 zeigt eine exemplarische Ausführungsform der Temperatursensorvorrichtung 100, ähnlich wie jene aus Figur 1, in einer Schnittdarstellung. In diesem Beispiel ist das Stützrohr 110 mit einem Anschlussstück 170 verbunden, welches in Form eines Flansches ausgebildet ist. Das Anschlussstück 170 weist einen mittigen Durchbruch 174, zum Beispiel eine Bohrung, auf. Das Stützrohr 110 weist an seinem proximalen Ende 113 eine Schulter 117 auf und ist durch den Durchbruch 174 hindurchgeschoben, sodass die Schulter 117 an einer vom distalen Ende 111 des Stützrohrs 110 abgewandten Seite des Anschlussstücks 170 anliegt. Stützrohr 110 und Anschlussstück 170 sind durch Schweißverbindungen 171 miteinander dicht verbunden. Zwischen Schweißungen 171, dem Durchbruch 174 und dem Außenumfang des Stützrohrs 110 ist ein Zwischenraum 173 eingeschlossen. Eine Prüfbohrung 172 erstreckt sich von einer vom distalen Ende 111 des Stützrohrs 110 abgewandten Seite des Anschlussstücks 170 bis zu diesem Zwischenraum 173.

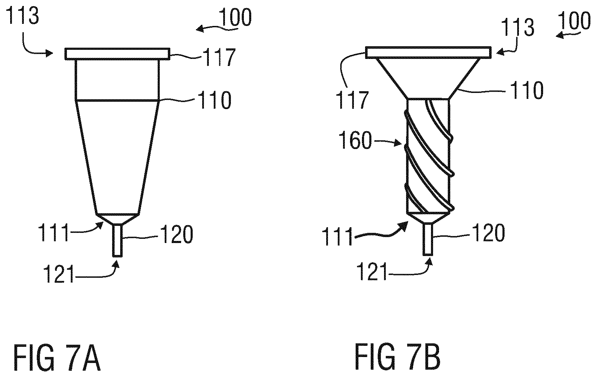

Die Figuren 7A und 7B zeigen verschiedene exemplarische Ausgestaltungen der Temperatursensorvorrichtung 100 in einer Seitenansicht. In Figur 7A weist das Stützrohr 110 eine konische Außenkontur auf, wobei es sich vom proximalen Ende 113 zum distalen Ende 111 hin verjüngt.

In Figur 7B weist das Stützrohr 110 einen konischen Abschnitt im Bereich des proximalen Endes 113 auf, an welchen sich ein Abschnitt anschließt, welcher mit einer Wendelstruktur 160 versehen ist.

Obgleich in den vorangehend beschriebenen Ausführungsbeispielen der erste Befestigungsbereich 130 stets einen ersten Abschnitt 131 umfasst, welcher das erste Sensorelement 120 direkt (also ohne Verbindungshülse 143) definiert umschließt, und der zweite Befestigungsbereich 140 einen zweiten Abschnitt 141 und eine Verbindungshülse 143 umfasst, ist die vorliegende Erfindung nicht auf diese Kombination beschränkt. Beispielsweise kann die Anordnung auch gerade umgekehrt ausgestaltet sein. Das heißt, der erste Befestigungsbereich 130 kann einen zweiten Abschnitt 141 und ein Verbindungshülse 143 umfassen, während der zweite Befestigungsbereich 140 einen ersten Abschnitt 131 umfassen kann, welcher das erste Sensorelement 120 direkt (also ohne Verbindungshülse 143) definiert umschließt. Ebenso können beide Befestigungsbereiche 130, 140 in gleicher Weise ausgestaltet sein, also beide etwa einen Abschnitt des ersten Kanals 115 umfassen, welcher das erste Sensorelement 120 definiert umschließt, oder beide etwa eine Verbindungshülse 143, welche das erste Sensorelement 120 definiert umschließt, und einen Abschnitt des ersten Kanals 115 umfassen, welcher diese Verbindungshülse 143 definiert umschließt.

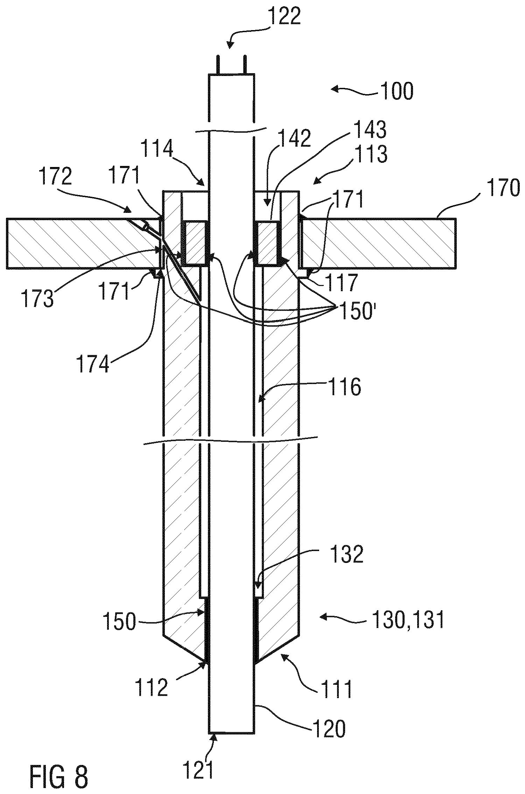

Figur 8 zeigt eine exemplarische Ausführungsform der Temperatursensorvorrichtung 100, ähnlich wie jene aus Figur 6, in einer Schnittdarstellung.

In diesem Beispiel ist das Stützrohr 110 mit einem Anschlussstück 170 verbunden, welches in Form eines Flansches ausgebildet ist. Das Anschlussstück 170 weist einen mittigen Durchbruch 174, zum Beispiel eine Bohrung, auf. Das Stützrohr 110 weist zwischen dem proximalen Ende 113 und dem distalen Ende 111 eine Schulter 117 auf und ist durch den Durchbruch 174 von unten hindurchgeschoben, sodass die Schulter 117 an einer dem distalen Ende 111 des Stützrohrs 110 zugewandten Seite des Anschlussstücks 170 anliegt bzw. das Anschlussstück 170 auf der Schulter 117 aufliegt. Stützrohr 110 und Anschlussstück 170 sind durch Schweißverbindungen 171 miteinander dicht verbunden. Zwischen Schweißungen 171, dem Durchbruch 174 und dem Außenumfang des Stützrohrs 110 ist ein Zwischenraum 173 eingeschlossen. Eine Prüfbohrung 172 erstreckt sich von einer vom distalen Ende 111 des Stützrohrs 110 abgewandten Seite des Anschlussstücks 170 bis zu diesem Zwischenraum 173 und ausgehend davon durch das Stützrohr 110 in den Zwischenabschnitt 116. Das heißt, am proximalen Ende 113 des Stützrohrs 110 ist eine Prüfbohrung 172 ausgebildet, welche mit dem Zwischenabschnitt 116 verbunden ist, wobei das Anschlussstück 170 einen Zugang zu der Prüfbohrung 172 aufweist.

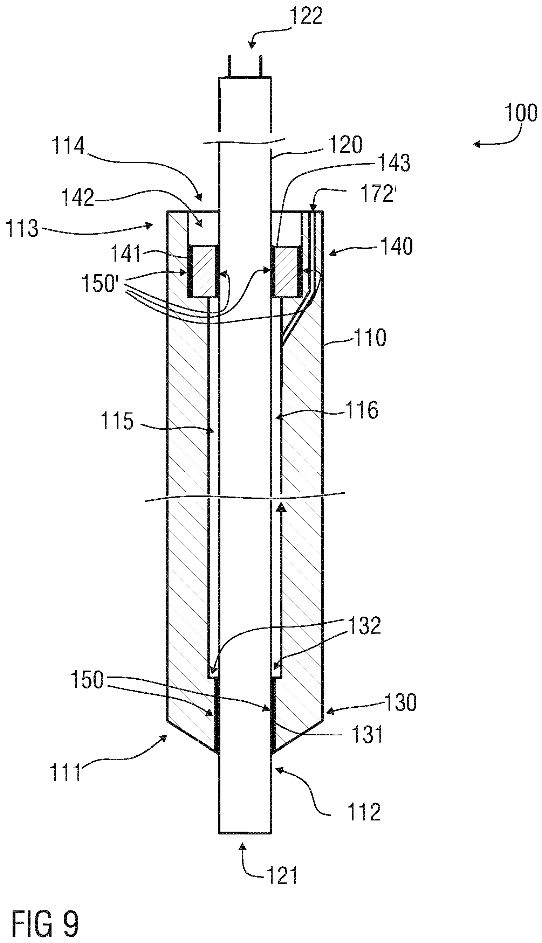

In Figur 9 ist eine exemplarische Ausführungsform der Temperatursensorvorrichtung 100, ähnlich wie jene aus Figur 1, in einer Schnittdarstellung gezeigt.

Zusätzlich zu der in Figur 1 dargestellten Ausführungsform ist am proximalen Ende 113 des Stützrohrs 110 eine Prüfbohrung 172' ausgebildet, welche mit dem Zwischenabschnitt 116 verbunden ist.

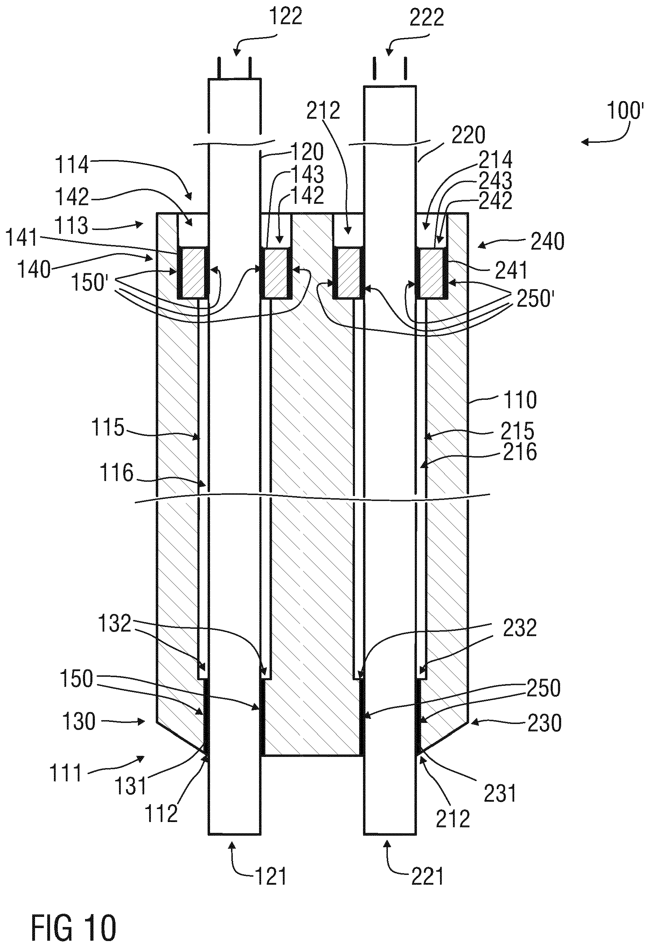

Figur 10 zeigt eine weitere exemplarische Ausführungsform einer Temperatursensorvorrichtung 100 in einer Schnittdarstellung.

Im Unterschied zu der in Figur 1 dargestellten Ausführungsform weist das Stützrohr 110 an seinem distalen Ende 111 zusätzlich zur ersten distalen Öffnung 112 eine zweite distale Öffnung 212 und an seinem proximalen Ende 113 zusätzlich zur ersten proximalen Öffnung 114 eine zweite proximale Öffnung 214 auf.

Zwischen der zweiten distalen Öffnung 212 und der zweiten proximalen Öffnung 214 erstreckt sich ein zweiter Kanal 215, welcher einen dritten Befestigungsbereich 230, einen Zwischenabschnitt 216 und einen vierten Befestigungsbereich 240 umfasst.

Ein zweites Sensorelement 220 ist durch die zweite proximale Öffnung 214 in den zweiten Kanal 215 eingeführt und durchläuft diesen, sodass eine Messspitze 221 des zweiten Sensorelements 220 durch die zweite distale Öffnung 212 hindurchtritt und über das distale Ende 111 des Stützrohrs 110 hinausragt.

Das Stützrohr 110 ist durch Lötverbindungen 250, 250' am dritten und vierten Befestigungsbereich 230, 240 mit dem zweiten Sensorelement 220 dichtend verbunden. Bei diesen Lötverbindungen 250, 250' handelt es sich beispielsweise um Vakuumlötverbindungen. Im Bereich des zwischen dem dritten und vierten Befestigungsbereich 230, 240 erstreckenden Zwischenabschnitts 216 des zweiten Kanals 215 sind das Stützrohr 110 und das zweite Sensorelement 220 nicht verbunden.

Der dritte Befestigungsbereich 230 umfasst in diesem Beispiel einen ersten Abschnitt 231 des zweiten Kanals 215, welcher das zweite Sensorelement 220 definiert umschließt. An diesen ersten Abschnitt 231 schließt sich der Zwischenabschnitt 216 an, welcher einen größeren Innendurchmesser aufweist, als der erste Abschnitt 231. Durch die sich zwischen den Abschnitten bildende Stufe ist ein erstes Lotreservoir 232 gebildet, welches sich somit vertikal direkt oberhalb des ersten Bereichs 231 befindet. Ein derartig ausgeführter Befestigungsbereich 230 ist beispielsweise analog dem in den Figuren 2A und 2B dargestellten Befestigungsbereich 130 ausgebildet.

Der zweite Befestigungsbereich 240 umfasst in diesem Beispiel einen zweiten Abschnitt 241 des zweiten Kanals 215 und eine Verbindungshülse 243, wobei die Verbindungshülse 243 das zweite Sensorelement 220 definiert umschließt und der zweite Abschnitt 241 des zweiten Kanals 215 die Verbindungshülse 243 definiert umschließt. Ein zweites Lotreservoir 242 ist vertikal direkt oberhalb des zweiten Abschnitts 241 und des Verbindungselements 243 vorgesehen. Ein derartig ausgeführter Befestigungsbereich 240 ist beispielsweise analog dem in den Figuren 4A und 4B dargestellten Befestigungsbereich 140 ausgebildet.

Bei dem zweiten Sensorelement 220 handelt es sich beispielsweise um eine mineralisolierte Mantelleitung, innerhalb welcher an oder nahe an der Messspitze 221 ein Sensor angeordnet ist. Dieser Sensor kann beispielsweise ein Widerstandsthermometer oder eine Verbindungsstelle zweier Thermoelementdrähte sein. An einem von der Messspitze 221 abgewandten Ende des zweiten Sensorelements 220 befinden sich Kontakte 222, über welche der Sensor mit einer Auswerteeinrichtung verbunden werden kann, welche zum Beispiel eine elektrische Eigenschaft des Sensors, wie etwa eine Spannung einen Strom oder einen Widerstand, zu einem Temperaturmesswert auswertet.

### BEZUGSZEICHENLISTE

- 100: Temperatursensorvorrichtung
- 110: Stützrohr
- 111: Distales Ende des Stützrohrs
- 112: Distale Öffnung
- 113: Proximales Ende des Stützrohrs
- 114: Proximale Öffnung
- 115: Erster Kanal
- 116: Zwischenabschnitt
- 117: Schulter
- 120: Erstes Sensorelement
- 121: Messspitze
- 122: Kontakte
- 130: Erster Befestigungsbereich
- 131: Erster Abschnitt
- 132: Erstes Lotreservoir
- 140: Zweiter Befestigungsbereich
- 141: Zweiter Abschnitt
- 142: Zweites Lotreservoir
- 143: Verbindungshülse
- 150, 150': Lötverbindung
- 151: Ring aus Lotmaterial
- 160: Wendelstruktur
- 170: Anschlussstück
- 171: Schweißung
- 172, 172': Prüfbohrung
- 173: Zwischenraum
- 174: Durchbruch
- 212: Distale Öffnung
- 214: Proximale Öffnung
- 215: Zweiter Kanal
- 216: Zwischenabschnitt
- 220: Zweites Sensorelement
- 221: Messspitze
- 222: Kontakte
- 230: Dritter Befestigungsbereich
- 231: Erster Abschnitt
- 232: Erstes Lotreservoir
- 240: Vierter Befestigungsbereich
- 241: Zweiter Abschnitt
- 242: Zweites Lotreservoir
- 243: Verbindungshülse
- 250, 250': Lötverbindung
- 300: Haltevorrichtung

## Patentansprüche

1. Temperatursensorvorrichtung (100), umfassend
- ein Stützrohr (110) mit einem distalen Ende (111) mit einer ersten distalen Öffnung (112), einem proximalen Ende (113) mit einer ersten proximalen Öffnung (114) und einem ersten Kanal (115), welcher sich zwischen den Öffnungen (112, 114) erstreckt, und
- ein erstes Sensorelement (120), welches durch die erste proximale Öffnung (114) in den ersten Kanal (115) eingeführt ist und diesen durchläuft, sodass eine Messspitze (121) des ersten Sensorelements (120) durch die erste distale Öffnung (112) hindurchtritt und über das distale Ende (111) des Stützrohrs (110) zumindest abschnittsweise hinausragt,
wobei
- das Stützrohr (110) am oder nahe am distalen Ende (111) einen ersten Befestigungsbereich (130) aufweist, sowie am oder nahe am proximalen Ende (113) einen zweiten Befestigungsbereich (140) aufweist,
- das erste Sensorelement (120) durch Lötverbindungen (150, 150') am ersten sowie am zweiten Befestigungsbereich (130, 140) mittelbar oder unmittelbar mit dem Stützrohr (110) dichtend verbunden ist, **dadurch gekennzeichnet, dass**
- sich zwischen dem ersten und zweiten Befestigungsbereich (130, 140) ein Zwischenabschnitt (116) des ersten Kanals (115) erstreckt, wobei entlang des Zwischenabschnitts (116) das Stützrohr (110) und das erste Sensorelement (120) nicht verbunden sind und sich nicht berühren, und dass
- wenigstens einer der Befestigungsbereiche (130, 140) einen ersten Abschnitt (131) des ersten Kanals (115) umfasst, welcher das erste Sensorelement (120) unter Ausbildung eines Ringspalts definiert umschließt,
- an einem Ende des ersten Abschnitts (131) ein erstes Lotreservoir (132) zur Aufnahme eines Lots angeordnet ist und
- die Lötverbindung (150) durch aus dem Lotreservoir (132) in den Ringspalt geflossenes und den Ringspalt vollständig ausfüllendes Lot gebildet ist.

2. Temperatursensorvorrichtung (100) nach Anspruch 1, wobei die Lötverbindung (150, 150') am ersten Befestigungsbereich (130) und/oder die Lötverbindung (150, 150') am zweiten Befestigungsbereich (140) eine mit einem flussmittelfreien Lot hergestellte Vakuumlötverbindung ist.

3. Temperatursensorvorrichtung (100) nach Anspruch 1 oder 2, wobei der Zwischenabschnitt (116) evakuiert ist.

4. Temperatursensorvorrichtung (100) nach einem der vorangehenden Ansprüche, wobei sich die Lötverbindungen (150, 150') zumindest im Wesentlichen jeweils über eine gesamte Länge des ersten Befestigungsbereichs (130) und/oder eine gesamte Länge des zweiten Befestigungsbereichs (140) erstrecken.

5. Temperatursensorvorrichtung (100) nach einem der vorangehenden Ansprüche, wobei der erste Abschnitt (131) einen Innendurchmesser aufweist, welcher
- höchstens 0,5 mm größer ist, oder
- bevorzugt höchstens 0,1 mm größer ist, oder
- besonders bevorzugt höchstens 0,03 mm größer ist
als der Außendurchmesser des ersten Sensorelements (120) im Bereich des ersten Abschnitts (131) und/oder
wobei der erste Abschnitt (131) das erste Sensorelement (120) über eine Länge von
- mindestens 1 mm, oder
- bevorzugt mindestens 8 mm, oder
- besonders bevorzugt mindestens 10 mm
definiert umschließt und über diese Länge umfänglich durch die Lötverbindung (150, 150') mit dem ersten Sensorelement dichtend verbunden ist.

6. Temperatursensorvorrichtung (100) nach einem der vorangehenden Ansprüche, wobei sich an den ersten Abschnitt (131) des ersten Kanals (115) der Zwischenabschnitt (116) anschließt, wobei der Zwischenabschnitt (116) einen größeren Innendurchmesser als der erste Abschnitt (131) aufweist, und
wobei das erste Lötreservoir (132) durch einen Übergangsbereich oder eine Stufe zwischen dem ersten Abschnitt (131) und dem Zwischenabschnitt (116) gebildet ist.

7. Temperatursensorvorrichtung (100) nach Anspruch 6, wobei der Innendurchmesser des Zwischenabschnitts (116)
- mindestens 0,05 mm größer ist, oder
- bevorzugt mindestens 0,1 mm größer ist, oder
- besonders bevorzugt mindestens 1 mm größer ist
als der Innendurchmesser des ersten Abschnitts (131) des ersten Kanals (115).

8. Temperatursensorvorrichtung (100) nach einem der vorangehenden Ansprüche, wobei wenigstens einer der Befestigungsbereiche (130, 140) einen zweiten Abschnitt (141) des ersten Kanals (115) und eine Verbindungshülse (143) umfasst, wobei
- die Verbindungshülse (143) das erste Sensorelement (120) definiert umschließt und
- der zweite Abschnitt (141) des ersten Kanals (115) die Verbindungshülse (143) definiert umschließt und
- ein zweites Lotreservoir (142) an einem Ende des zweiten Abschnitts (141) angeordnet ist.

9. Temperatursensorvorrichtung (100) nach Anspruch 8, wobei der zweite Abschnitt (141) des ersten Kanals (115) einen Innendurchmesser aufweist, welcher
- höchstens 0,5 mm größer ist, oder
- bevorzugt höchstens 0,1 mm größer ist, oder
- besonders bevorzugt höchstens 0,03 mm größer ist
als der Außendurchmesser der Verbindungshülse (143) und/oder
wobei die Verbindungshülse (143) einen Innendurchmesser aufweist, welcher
- höchstens 0,5 mm größer ist, oder
- bevorzugt höchstens 0,1 mm größer ist, oder
- besonders bevorzugt höchstens 0,03 mm größer ist
als der Außendurchmesser des ersten Sensorelements (120) und/oder
wobei der zweite Abschnitt (141) des ersten Kanals (115) und die Verbindungshülse (143) das erste Sensorelement (120) über eine Länge von
- mindestens 1 mm, oder
- bevorzugt mindestens 8 mm, oder
- besonders bevorzugt mindestens 10 mm
umschließen und über diese Länge umfänglich der zweite Abschnitt (141) zumindest mit der Verbindungshülse (143) und die Verbindungshülse (143) zudem mit dem ersten Sensorelement (120) durch die Lötverbindung (150, 150') dichtend verbunden ist.

10. Temperatursensorvorrichtung (100) nach einem der vorangehenden Ansprüche, wobei das proximale Ende (113) des Stützrohrs (110) mit einem Anschlussstück (170) verbunden ist oder ein solches Anschlussstück (170) umfasst.

11. Temperatursensorvorrichtung (100) nach Anspruch 10, wobei das Stützrohr (110) integral mit dem Anschlussstück (170) verbunden ist, oder
wobei das Anschlussstück (170) einen Durchgang aufweist und das proximale Ende (113) des Stützrohrs (110) in oder an diesem Durchgang angeordnet ist und durch
- eine Schraubverbindung und/oder
- eine Lötverbindung, insbesondere eine Vakuumlötverbindung, und/oder
- eine oder mehrere Schweißverbindungen
mit dem Anschlussstück (170) verbunden ist.

12. Temperatursensorvorrichtung (100) nach Anspruch 10, wobei das Anschlussstück (170) einen Durchgang aufweist und das proximale Ende des Stützrohrs (110) in oder an diesem Durchgang angeordnet ist und durch Schweißverbindungen (171) an beiden Seiten des Durchgangs mit dem Anschlussstück (170) verbunden ist, wobei das Anschlussstück (170) eine Prüfbohrung (172) aufweist, welche sich von einer dem distalen Ende (111) des Stützrohrs (110) abgewandten Seite des Anschlussstücks (170) in einen Zwischenraum (173) erstreckt, welcher zwischen dem Durchgang dem proximalen Ende (113) und den Schweißverbindungen (171) ausgebildet ist, oder
am proximalen Ende (113) des Stützrohrs (110) eine Prüfbohrung (172) ausgebildet ist, welche mit dem Zwischenabschnitt (116) verbunden ist, wobei das Anschlussstück (170) einen Zugang zu der Prüfbohrung (172) aufweist.

13. Temperatursensorvorrichtung (100) nach einem der vorangehenden Ansprüche, wobei am proximalen Ende (113) des Stützrohrs (110) eine Prüfbohrung (172') ausgebildet ist, welche mit dem Zwischenabschnitt (116) verbunden ist.

14. Temperatursensorvorrichtung (100) nach einem der vorangehenden Ansprüche, wobei das Stützrohr (110)
- am distalen Ende (111) zumindest eine zweite distale Öffnung (212),
- am proximalen Ende (113) zumindest eine zweite proximale Öffnung (214),
- zumindest einen zweiten Kanal (215), welcher sich zwischen der zweiten distalen Öffnung (212) und der zweiten proximalen Öffnung (214) erstreckt, und
- zumindest ein zweites Sensorelement (220) umfasst,
wobei
- das zweite Sensorelement (220) durch die zweite proximale Öffnung (214) in den zweiten Kanal (215) eingeführt ist und diesen durchläuft, sodass eine Messspitze (221) des zweiten Sensorelements (220) durch die zweite distale Öffnung (212) hindurchtritt und über das distale Ende (111) des Stützrohrs (110) zumindest abschnittsweise hinausragt,
- das Stützrohr (110) am oder nahe am distalen Ende (111) einen dritten Befestigungsbereich (230) aufweist, sowie am oder nahe am proximalen Ende (113) einen vierten Befestigungsbereich (240) aufweist und
- das zweite Sensorelement (220) durch Lötverbindungen (250, 250') am dritten sowie am vierten Befestigungsbereich (230, 240) mittelbar oder unmittelbar mit dem Stützrohr (110) dichtend verbunden ist.

15. Temperatursensorvorrichtung (100) nach Anspruch 14, wobei sich zwischen dem dritten und vierten Befestigungsbereich (230, 240) ein zweiter Zwischenabschnitt (216) des zweiten Kanals (215) erstreckt, wobei entlang des zweiten Zwischenabschnitts (216) das Stützrohr (110) und das zweite Sensorelement (220) nicht verbunden sind.

16. Verfahren zur Herstellung einer Temperatursensorvorrichtung (100) nach einem der vorangehenden Ansprüche, umfassend die Schritte:
A) Bereitstellen eines Stützrohrs (110) mit einem distalen Ende (111) mit einer ersten distalen Öffnung (112), einem proximalen Ende (113) mit einer ersten proximalen Öffnung (114) und einem ersten Kanal (115), welcher sich zwischen den Öffnungen (112, 114) erstreckt,
B) Einführen eines Sensorelements (120) in den ersten Kanal (115) durch die erste proximale Öffnung (114), sodass das erste Sensorelement (120) den ersten Kanal durchläuft und eine Messspitze (121) des ersten Sensorelements (120) durch die erste distale Öffnung (112) hindurchtritt und über das distale Ende (111) des Stützrohrs (110) zumindest abschnittsweise hinausragt,
wobei sich am oder nahe am distalen Ende (111) ein erster Befestigungsbereich (130) und am oder nahe am proximalen Ende (113) ein zweiter Befestigungsbereich (140) befindet, und
wobei der erste Befestigungsbereich (130) einen ersten Abschnitt (131) des ersten Kanals (115) umfasst, welcher das Stützrohr (110) unter Ausbildung eines Ringspalts definiert umschließt und
wobei an einem Ende des ersten Abschnitts (131) ein erstes Lotreservoir (132) angeordnet wird, und
B1) Platzieren von Lotmaterial im oder am ersten Lotreservoir (131), und
C) Herstellen von Lötverbindungen (150, 150') zwischen dem Stützrohr (110) und dem ersten Sensorelement (120) am ersten und zweiten Befestigungsbereich (130, 140) derart, dass entlang eines sich zwischen dem ersten und zweiten Befestigungsbereich (130, 140) erstreckenden Zwischenabschnitts (116) des ersten Kanals (115) das Stützrohr (110) und das erste Sensorelement (120) nicht verbunden werden und sich nicht berühren.

17. Verfahren nach Anspruch 16,
wobei der zweite Befestigungsbereich (140) einen zweiten Abschnitt (141) des ersten Kanals (115) und eine Verbindungshülse (143) umfasst, wobei die Verbindungshülse (143) das erste Sensorelement (120) definiert umschließt und der zweite Abschnitt (141) die Verbindungshülse (143) definiert umschließt und
wobei ein zweites Lotreservoir (142) an einem Ende des zweiten Abschnitts (141) angeordnet wird,
umfassend den folgenden, zwischen dem Schritt B) und C) ausgeführten Schritt:
B2) Platzieren von Lotmaterial im oder am zweiten Lotreservoir (141).

18. Verfahren nach Anspruch 17,
wobei das erste Lotreservoir (132) und das zweite Lotreservoir (142) jeweils entweder beide
an einem vom distalen Ende (111) abgewandten oder beide an einem dem distalen Ende (111) zugewandten Ende des ersten Abschnitts (131) respektive zweiten Abschnitts (141) angeordnet werden und
wobei Schritt C) folgende Teilschritte umfasst:
C1) Ausrichten der Temperatursensorvorrichtung (100), sodass sich das erste Lotreservoir (132) vertikal oberhalb vom ersten Abschnitt (131) und das zweite Lotreservoir (142) vertikal oberhalb des zweiten Abschnitts (141) befindet und
C2) Durchführen eines Lötprozesses.

19. Verfahren nach einem der Ansprüche 16 bis 18, wobei die Lötverbindungen (150, 150') als Vakuumlötverbindungen in einem als Vakuumlötprozess ausgebildeten Lötprozess erzeugt werden.

## Claims

1. Temperature sensor device (100), comprising
- a support tube (110) having a distal end (111) having a first distal opening (112), a proximal end (113) having a first proximal opening (114) and a first channel (115) which extends between the openings (112, 114), and
- a first sensor element (120) which is introduced through the first proximal opening (114) into the first channel (115) and passes through the latter so that a measuring tip (121) of the first sensor element (120) penetrates the first distal opening (112) and protrudes at least in portions beyond the distal end (111) of the support tube (110),
wherein
- the support tube (110) has a first fastening region (130) at or near the distal end (111), and a second fastening region (140) at or near the proximal end (113),
- the first sensor element (120) is connected in a sealing manner, indirectly or directly, to the support tube (110) by soldered connections (150, 150') on the first and the second fastening region (130, 140), **characterized in that**
- an intermediate portion (116) of the first channel (115) extends between the first and the second fastening region (130, 140), wherein the support tube (110) and the first sensor element (120) are not connected and are not in contact along the intermediate portion (116), and **in that**
- at least one of the fastening regions (130, 140) comprises a first portion (131) of the first channel (115), which encloses the first sensor element (120) in a defined manner while forming an annular gap,
- a first solder reservoir (132) for receiving a solder is disposed on one end of the first portion (131), and
- the soldered connection (150) is formed by solder flowing from the solder reservoir (132) into the annular gap and filling the annular gap completely.

2. Temperature sensor device (100) according to Claim 1, wherein the soldered connection (150, 150') on the first fastening region (130) and/or the soldered connection (150, 150') on the second fastening region (140) are/is a vacuum soldered connection produced with a flux-free solder.

3. Temperature sensor device (100) according to Claim 1 or 2, wherein the intermediate portion (116) is evacuated.

4. Temperature sensor device (100) according to one of the preceding claims, wherein the soldered connections (150, 150') extend in each case at least substantially over a total length of the first fastening region (130) and/or a total length of the second fastening region (140).

5. Temperature sensor device (100) according to one of the preceding claims, wherein the first portion (131) has an internal diameter which
- is larger by at most 0.5 mm, or
- preferably is larger by at most 0.1 mm, or
- particularly preferably is larger by at most 0.03 mm
than the external diameter of the first sensor element (120) in the region of the first portion (131), and/or
wherein the first portion (131) encloses the first sensor element (120) in a defined manner over a length of
- at least 1 mm, or
- preferably at least 8 mm, or
- particularly preferably at least 10 mm
and is circumferentially connected in a sealing manner by the soldered connection (150, 150') to the first sensor element over this length.

6. Temperature sensor device (100) according to one of the preceding claims, wherein the intermediate portion (116) adjoins the first portion (131) of the first channel (115), wherein the intermediate portion (116) has a larger internal diameter than the first portion (131), and
wherein the first solder reservoir (132) is formed by a transition region or a step between the first portion (131) and the intermediate portion (116).

7. Temperature sensor device (100) according to Claim 6, wherein the internal diameter of the intermediate portion (116)
- is larger by at least 0.05 mm, or
- preferably is larger by at least 0.1 mm, or
- particularly preferably is larger by at least 1 mm
than the internal diameter of the first portion (131) of the first channel (115).

8. Temperature sensor device (100) according to one of the preceding claims, wherein at least one of the fastening regions (130, 140) comprises a second portion (141) of the first channel (115) and a connecting sleeve (143), wherein
- the connecting sleeve (143) encloses the first sensor element (120) in a defined manner, and
- the second portion (141) of the first channel (115) encloses the connecting sleeve (143) in a defined manner, and
- a second solder reservoir (142) is disposed on one end of the second portion (141).

9. Temperature sensor device (100) according to Claim 8, wherein the second portion (141) of the first channel (115) has an internal diameter which
- is larger by at most 0.5 mm, or
- preferably is larger by at most 0.1 mm, or
- particularly preferably is larger by at most 0.03 mm
than the external diameter of the connecting sleeve (143), and/or
wherein the connecting sleeve (143) has an internal diameter which
- is larger by at most 0.5 mm, or
- preferably is larger by at most 0.1 mm, or
- particularly preferably is larger by at most 0.03 mm
than the external diameter of the first sensor element (120), and/or
wherein the second portion (141) of the first channel (115) and the connecting sleeve (143) enclose the first sensor element (120) over a length of
- at least 1 mm, or
- preferably at least 8 mm, or
- particularly preferably at least 10 mm
and the second portion (141) is circumferentially connected in a sealing manner to at least the connecting sleeve (143), and the connecting sleeve (143) is moreover circumferentially connected in a sealing manner to the first sensor element (120), by the soldered connection (150, 150') over this length.

10. Temperature sensor device (100) according to one of the preceding claims, wherein the proximal end (113) of the support tube (110) is connected to a connection piece (170), or comprises such a connection piece (170).

11. Temperature sensor device (100) according to Claim 10, wherein the support tube (110) is integrally connected to the connection piece (170), or
wherein the connection piece (170) has a passage and the proximal end (113) of the support tube (110) is disposed in or at this passage and is connected to the connection piece (170) by way of
- a threaded connection, and/or
- a soldered connection, in particular a vacuum soldered connection, and/or
- one or a plurality of welded connections.

12. Temperature sensor device (100) according to Claim 10, wherein the connection piece (170) has a passage, and the proximal end of the support tube (110) is disposed in or at this passage and is connected by welded connections (171) on both sides of the passage to the connection piece (170), wherein the connection piece (170) has a test bore (172) which extends from a side of the connection piece (170) facing way from the distal end (111) of the support tube (110) into an intermediate space (173) formed between the passage, the proximal end (113) and the welded connections (171), or formed on the proximal end (113) of the support tube (110) is a test bore (172) which is connected to the intermediate portion (116), wherein the connection piece (170) has an access to the test bore (172).

13. Temperature sensor device (100) according to one of the preceding claims, wherein formed on the proximal end (113) of the support tube (110) is a test bore (172') which is connected to the intermediate portion (116).

14. Temperature sensor device (100) according to one of the preceding claims, wherein the support tube (110) comprises
at least one second distal opening (212) at the distal end (111),
- at least one second proximal opening (214) at the proximal end (113),
- at least one second channel (215) extending between the second distal opening (212) and the second proximal opening (214), and
- at least one second sensor element (220),
wherein
- the second sensor element (220) is introduced through the second proximal opening (214) into the second channel (215) and passes through the latter so that a measuring tip (221) of the second sensor element (220) penetrates the second distal opening (212) and protrudes at least in portions beyond the distal end (111) of the support tube (110),
- the support tube (110) has a third fastening region (230) at or near the distal end (111), and a fourth fastening region (240) at or near the proximal end (113), and
- the second sensor element (220) is connected in a sealing manner, indirectly or directly, to the support tube (110) by soldered connections (250, 250') on the third and the fourth fastening region (230, 240).

15. Temperature sensor device (100) according to Claim 14, wherein a second intermediate portion (216) of the second channel (215) extends between the third and the fourth fastening region (230, 240), wherein the support tube (110) and the second sensor element (220) are not connected along the second intermediate portion (216).

16. Method for producing a temperature sensor device (100) according to one of the preceding claims, comprising the steps:
A) providing a support tube (110) having a distal end (111) having a first distal opening (112), a proximal end (113) having a first proximal opening (114), and a first channel (115) which extends between the openings (112, 114),
B) introducing a sensor element (120) into the first channel (115) through the first proximal opening (114), so that the first sensor element (120) extends through the first channel and a measuring tip (121) of the first sensor element (120) penetrates the first distal opening (112) and protrudes at least in portions beyond the distal end (111) of the support tube (110),
wherein a first fastening region (130) is located at or near the distal end (111), and a second fastening region (140) is located at or near the proximal end (113), and
wherein the first fastening region (130) comprises a first portion (131) of the first channel (115), which encloses the support tube (110) in a defined manner while forming an annular gap, and
wherein a first solder reservoir (132) is disposed on one end of the first portion (131), and
B1) placing solder material in or at the first solder reservoir (131), and
C) producing soldered connections (150, 150') between the support tube (110) and the first sensor element (120) on the first and the second fastening regions (130, 140) in such a manner that the support tube (110) and the first sensor element (120) are not connected and are not in contact along an intermediate portion (116) of the first channel (115) extending between the first and the second fastening region (130, 140).

17. Method according to Claim 16,
wherein the second fastening region (140) comprises a second portion (141) of the first channel (115) and a connecting sleeve (143), wherein the connecting sleeve (143) encloses the first sensor element (120) in a defined manner, and the second portion (141) encloses the connecting sleeve (143) in a defined manner, and
wherein a second solder reservoir (142) is disposed on one end of the second portion (141),
comprising the following step, carried out between steps B) and C):
B2) placing solder material in or at the second solder reservoir (141).

18. Method according to Claim 17,
wherein the first solder reservoir (132) and the second solder reservoir (142) are in each case either both disposed on an end of the first portion (131) or second portion (141) facing away from the distal end (111), or both disposed on an end of the first portion (131) or the second portion (141) facing the distal end (111), and
wherein step C) comprises the following sub-steps:
C1) aligning the temperature sensor device (100) so that the first solder reservoir (132) is located vertically above the first portion (131), and the second solder reservoir (142) is located vertically above the second portion (141), and
C2) carrying out a soldering process.

19. Method according to one of Claims 16 to 18, wherein the soldered connections (150, 150') are generated as vacuum soldered connections in a soldering process designed as a vacuum soldering process.

## Revendications

1. Dispositif capteur de température (100), comprenant
- un tube de support (110) ayant une extrémité distale (111) pourvue d'une première ouverture distale (112), une extrémité proximale (113) pourvue d'une première ouverture proximale (114), et un premier canal (115) s'étendant entre lesdites ouvertures (112, 114), et
- un premier élément capteur (120) introduit dans le premier canal (115) par la première ouverture proximale (114) et le traversant, de sorte qu'une pointe de mesure (121) du premier élément capteur (120) passe à travers la première ouverture distale (112) et dépasse au moins partiellement de l'extrémité distale (111) du tube de support (110),
dans lequel
- le tube de support (110) présente, au niveau ou à proximité de l'extrémité distale (111), une première zone de fixation (130) et, au niveau ou à proximité de l'extrémité proximale (113), une deuxième zone de fixation (140),
- le premier élément capteur (120) est relié de manière étanche au tube de support (110), directement ou indirectement, par des connexions brasées (150, 150') au niveau des première et deuxième zones de fixation (130, 140), **caractérisé en ce que**
- une partie intermédiaire (116) du premier canal (115) s'étend entre les première et deuxième zones de fixation (130, 140), le tube de support (110) et le premier élément capteur (120) n'étant ni reliés ni en contact mutuel le long de ladite partie intermédiaire (116), et **en ce que**
- au moins l'une des zones de fixation (130, 140) comprend une première partie (131) du premier canal (115), qui entoure de manière définie le premier élément capteur (120) en formant une fente annulaire,
- un premier réservoir de brasure (132) est disposé à une extrémité de la première partie (131) pour recevoir une brasure, et
- la liaison brasée (150) est formée par de la brasure ayant coulé du réservoir de brasure (132) dans la fente annulaire et remplissant complètement ladite fente annulaire.

2. Dispositif capteur de température (100) selon la revendication 1, dans lequel la liaison brasée (150, 150') au niveau de la première zone de fixation (130) et/ou la liaison brasée (150, 150') au niveau de la deuxième zone de fixation (140) est une liaison brasée sous vide réalisée avec une brasure sans flux.

3. Dispositif capteur de température (100) selon la revendication 1 ou 2, dans lequel la partie intermédiaire (116) est mise sous vide.

4. Dispositif capteur de température (100) selon l'une des revendications précédentes, dans lequel les connexions brasées (150, 150') s'étendent au moins sensiblement chacune sur toute une longueur de la première zone de fixation (130) et/ou sur toute une longueur de la deuxième zone de fixation (140).

5. Dispositif capteur de température (100) selon l'une des revendications précédentes, dans lequel la première partie (131) présente un diamètre intérieur qui est
- supérieur d'au plus 0,5 mm, ou
- de préférence, supérieur d'au plus 0,1 mm, ou
- de manière particulièrement préférée, supérieur d'au plus 0,03 mm au diamètre extérieur du premier élément capteur (120) dans la région de la première partie (131), et/ou
dans lequel la première partie (131) entoure de manière définie le premier élément capteur (120) sur une longueur
- d'au moins 1 mm, ou
- de préférence, d'au moins 8 mm, ou
- de manière particulièrement préférée, d'au moins 10 mm
et sur cette longueur, est reliée circonférentiellement de manière étanche par la liaison brasée (150, 150') au premier élément capteur.

6. Dispositif capteur de température (100) selon l'une des revendications précédentes, dans lequel la partie intermédiaire (116) se raccorde à la première partie (131) du premier canal (115), la partie intermédiaire (116) présentant un diamètre intérieur supérieur à celui de la première partie (131), et
dans lequel le premier réservoir de brasure (132) est formé par une zone de transition
ou un épaulement entre la première partie (131) et la partie intermédiaire (116).

7. Dispositif capteur de température (100) selon la revendication 6, dans lequel le diamètre intérieur de la partie intermédiaire (116) est
- supérieur d'au moins 0,05 mm, ou
- de préférence, supérieur d'au moins 0,1 mm, ou
- de manière particulièrement préférée, supérieur d'au moins 1 mm au diamètre intérieur de la première partie (131) du premier canal (115).

8. Dispositif capteur de température (100) selon l'une des revendications précédentes, dans lequel au moins l'une des zones de fixation (130, 140) comprend une deuxième partie (141) du premier canal (115) et un manchon de raccordement (143), dans lequel
- le manchon de raccordement (143) entoure de manière définie le premier élément capteur (120), et
- la deuxième partie (141) du premier canal (115) entoure de manière définie le manchon de raccordement (143),
- un deuxième réservoir de brasure (142) est disposé à une extrémité de la deuxième partie (141).

9. Dispositif capteur de température (100) selon la revendication 8, dans lequel la deuxième partie (141) du premier canal (115) présente un diamètre intérieur qui est
- supérieur d'au plus 0,5 mm, ou
- de préférence, supérieur d'au plus 0,1 mm, ou
- de manière particulièrement préférée, supérieur d'au plus 0,03 mm
au diamètre extérieur du manchon de raccordement (143), et/ou
dans lequel le manchon de raccordement (143) présente un diamètre intérieur qui est
- supérieur d'au plus 0,5 mm, ou
- de préférence, supérieur d'au plus 0,1 mm, ou
- de manière particulièrement préférée, supérieur d'au plus 0,03 mm
au diamètre extérieur du premier élément capteur (120), et/ou
dans lequel la deuxième partie (141) du premier canal (115) et le manchon de raccordement (143) entourent le premier élément capteur (120) sur une longueur
- d'au moins 1 mm, ou
- de préférence, d'au moins 8 mm, ou
- de manière particulièrement préférée, d'au moins 10 mm
et sur cette longueur, la deuxième partie (141), de manière circonférentielle, est reliée au moins au manchon de raccordement (143) ainsi qu'en outre, le manchon de raccordement (143) est relié au premier élément capteur (120) de manière étanche par la liaison brasée (150, 150').

10. Dispositif capteur de température (100) selon l'une des revendications précédentes, dans lequel l'extrémité proximale (113) du tube de support (110) est reliée à une pièce de raccordement (170) ou comprend une telle pièce de raccordement (170).

11. Dispositif capteur de température (100) selon la revendication 10, dans lequel le tube de support (110) est relié de manière intégrale à la pièce de raccordement (170), ou
dans lequel la pièce de raccordement (170) présente un passage et l'extrémité proximale (113) du tube de support (110) est disposée dans ou sur ce passage et est reliée par
- une liaison vissée, et/ou
- une liaison brasée, en particulier une liaison brasée sous vide, et/ou
- une ou plusieurs soudures
à la pièce de raccordement (170).

12. Dispositif capteur de température (100) selon la revendication 10, dans lequel la pièce de raccordement (170) présente un passage et l'extrémité proximale du tube de support (110) est disposée dans ou sur ce passage et est reliée à la pièce de raccordement (170) par des soudures (171) des deux côtés du passage, la pièce de raccordement (170) présentant un alésage de contrôle (172) qui s'étend depuis un côté de la pièce de raccordement (170) opposé à l'extrémité distale (111) du tube de support (110) vers un espace intermédiaire (173) formé entre le passage, l'extrémité proximale (113) et les soudures (171), ou dans lequel un alésage de contrôle (172) est formé à l'extrémité proximale (113) du tube de support (110) et est relié à la partie intermédiaire (116), la pièce de raccordement (170) présentant un accès audit alésage de contrôle (172).

13. Dispositif capteur de température (100) selon l'une des revendications précédentes, dans lequel un alésage de contrôle (172') est réalisé à l'extrémité proximale (113) du tube de support (110) et est relié à la partie intermédiaire (116).

14. Dispositif capteur de température (100) selon l'une des revendications précédentes, dans lequel le tube de support (110) comprend
- au moins une deuxième ouverture distale (212) à l'extrémité distale (111),
- au moins une deuxième ouverture proximale (214) à l'extrémité proximale (113),
- au moins un deuxième canal (215) qui s'étend entre la deuxième ouverture distale (212) et la deuxième ouverture proximale (214), et
- au moins un deuxième élément capteur (220),
dans lequel
- le deuxième élément capteur (220) est introduit dans le deuxième canal (215) par la deuxième ouverture proximale (214) et le traverse, de sorte qu'une pointe de mesure (221) du deuxième élément capteur (220) passe à travers la deuxième ouverture distale (212) et dépasse au moins partiellement de l'extrémité distale (111) du tube de support (110),
- le tube de support (110) présente, au niveau ou à proximité de l'extrémité distale (111), une troisième zone de fixation (230), et, au niveau ou à proximité de l'extrémité proximale (113), une quatrième zone de fixation (240), et
- le deuxième élément capteur (220) est relié de manière étanche au tube de support (110), directement ou indirectement, par des liaisons brasées (250, 250') au niveau des troisième et quatrième zones de fixation (230, 240).

15. Dispositif capteur de température (100) selon la revendication 14, dans lequel une deuxième partie intermédiaire (216) du deuxième canal (215) s'étend entre les troisième et quatrième zones de fixation (230, 240), le tube de support (110) et le deuxième élément capteur (220) n'étant pas reliés le long de ladite deuxième partie intermédiaire (216).

16. Procédé de fabrication d'un dispositif capteur de température (100) selon l'une des revendications précédentes, comprenant les étapes de procédé consistant à :
A) fournir un tube de support (110) ayant une extrémité distale (111) pourvue d'une première ouverture distale (112), une extrémité proximale (113) pourvue d'une première ouverture proximale (114), et un premier canal (115) s'étendant entre lesdites ouvertures (112, 114), et
B) introduire un élément capteur (120) dans le premier canal (115) par la première ouverture proximale (114), de sorte que le premier élément capteur (120) traverse le premier canal et qu'une pointe de mesure (121) du premier élément capteur (120) passe à travers la première ouverture distale (112) et dépasse au moins partiellement de l'extrémité distale (111) du tube de support (110),
dans lequel une première zone de fixation (130) est située au niveau ou à proximité de l'extrémité distale (111) et une deuxième zone de fixation (140) est située au niveau ou à proximité de l'extrémité proximale (113), et
dans lequel la première zone de fixation (130) comprend une première partie (131) du premier canal (115) qui entoure de manière définie le tube de support (110) en formant une fente annulaire, et
dans lequel un premier réservoir de brasure (132) est disposé à une extrémité de la première partie (131), et
B1) placer un matériau de brasure dans ou sur le premier réservoir de brasure (131), et
C) réaliser des liaisons brasées (150, 150') entre le tube de support (110) et le premier élément capteur (120) au niveau des première et deuxième zones de fixation (130, 140), de telle sorte que, le long d'une partie intermédiaire (116) du premier canal (115) s'étendant entre les première et deuxième zones de fixation (130, 140), le tube de support (110) et le premier élément capteur (120) ne soient ni reliés ni en contact mutuel.

17. Procédé selon la revendication 16,
dans lequel la deuxième zone de fixation (140) comprend une deuxième partie (141) du premier canal (115) et un manchon de raccordement (143), dans lequel le manchon de raccordement (143) entoure de manière définie le premier élément capteur (120) et la deuxième partie (141) entoure de manière définie le manchon de raccordement (143), et
dans lequel un deuxième réservoir de brasure (142) est disposé à une extrémité de la deuxième partie (141),
comprenant l'étape suivante, exécutée entre l'étape B) et l'étape C) :
B2) placer un matériau de brasure dans ou sur le deuxième réservoir de brasure (141).

18. Procédé selon la revendication 17,
dans lequel le premier réservoir de brasure (132) et le deuxième réservoir de brasure (142) sont respectivement disposés soit tous deux à une extrémité de la première partie (131), respectivement, de la deuxième partie (141), qui est tournée à l'opposé de l'extrémité distale (111), soit tous deux à une extrémité de la première partie, respectivement, de la deuxième partie, qui est tournée vers l'extrémité distale (111), et
dans lequel l'étape C) comprend les sous-étapes suivantes :
C1) orienter le dispositif capteur de température (100) de sorte que le premier réservoir de brasure (132) se trouve verticalement au-dessus de la première partie (131) et que le deuxième réservoir de brasure (142) se trouve verticalement au-dessus de la deuxième partie (141), et
C2) effectuer un processus de brasage.

19. Procédé selon l'une des revendications 16 à 18, dans lequel les liaisons brasées (150, 150') sont réalisées sous forme de liaisons brasées sous vide dans un processus de brasage conçu en tant que processus de brasage sous vide.
